(19) Europäisches Patentamt
European Patent Office
Office européen des brevets

(11) EP 4 389 798 A1

(12) **EUROPEAN PATENT APPLICATION**
published in accordance with Art. 153(4) EPC

(43) Date of publication:
**26.06.2024 Bulletin 2024/26**

(21) Application number: **22857870.4**

(22) Date of filing: **18.08.2022**

(51) International Patent Classification (IPC):
***C08G 69/14*** *(2006.01)* ***C08G 69/18*** *(2006.01)*

(52) Cooperative Patent Classification (CPC):
**C08G 69/14; C08G 69/16; C08G 69/18; C08L 77/02**

(86) International application number:
**PCT/CN2022/113177**

(87) International publication number:
**WO 2023/020559 (23.02.2023 Gazette 2023/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.08.2021 CN 202110960422**

(71) Applicants:
- **China Petroleum & Chemical Corporation Beijing 100728 (CN)**
- **Sinopec Research Institute of Petroleum Processing Co., Ltd. Beijing 100083 (CN)**

(72) Inventors:
- **TAO, Youhua Changchun, Jilin 130022 (CN)**
- **ZONG, Baoning Beijing 100083 (CN)**
- **WANG, Xianhong Changchun, Jilin 130022 (CN)**
- **LIU, Wei Beijing 100083 (CN)**
- **CHEN, Jinlong Changchun, Jilin 130022 (CN)**

(74) Representative: **Hoffmann Eitle Patent- und Rechtsanwälte PartmbB Arabellastraße 30 81925 München (DE)**

# (54) ANTIBACTERIAL NYLON 6 MATERIAL, PREPARATION METHOD THEREFOR, AND APPLICATION THEREOF

(57) Disclosed is an antibacterial nylon 6 material, preparation method therefor and application thereof, the antibacterial nylon 6 material has a structure represented by formula (I), wherein each $R_1$ group and each $R_2$ group are independently selected from the group consisting of $C_{1-24}$ linear or branched aliphatic hydrocarbyl groups, substituted or unsubstituted $C_{3-12}$ alicyclic hydrocarbyl groups, substituted or unsubstituted $C_{6-18}$ aryl groups and substituted or unsubstituted $C_{7-30}$ aralkyl groups, or the $R_1$ and $R_2$ groups on the same nitrogen atom, together with the attached N atom, form a 5-7 membered saturated or unsaturated heterocyclic ring; each $R_3$ group is independently selected from the group consisting of hydrogen (H), $C_{1-24}$ linear or branched aliphatic hydrocarbyl groups, substituted or unsubstituted $C_{3-12}$ alicyclic hydrocarbyl groups, substituted or unsubstituted $C_{6-18}$ aryl groups, and substituted or unsubstituted $C_{7-30}$ aralkyl groups; x is in a range of 0.02-0.30; y is in a range of 0.70-0.98, and x + y = 1. The antibacterial nylon 6 material has a broad-spectrum and high antibacterial effect, and a good antibacterial durability, and can be widely used in textiles, daily necessities, building materials, packaging materials, various panels and the like as a public health material.

EP 4 389 798 A1

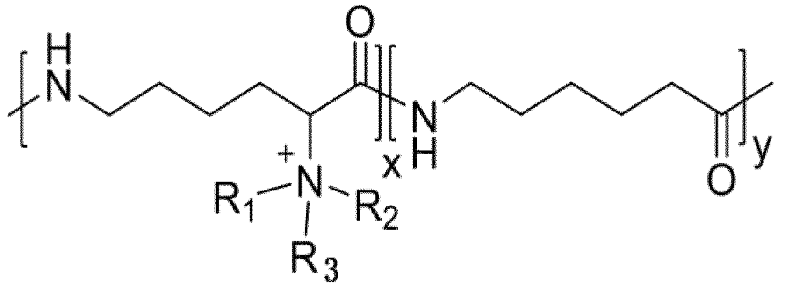

(I).

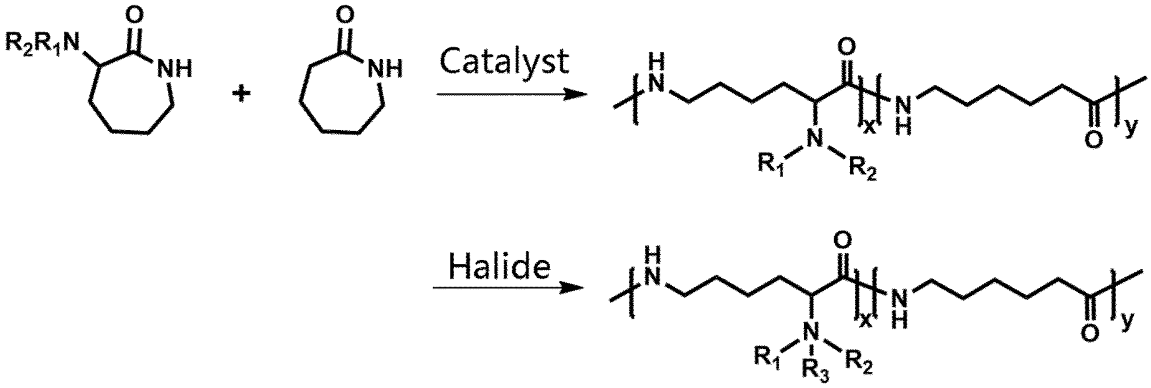


Fig. 1

## Description

Technical Field

The present application relates to the technical field of antibacterial high polymer materials, and particularly relates to an antibacterial nylon 6 material, preparation method therefor and application thereof.

Background Art

Microorganisms in nature are of a wide variety. In daily life, microorganisms are closely and indiscriminately connected with people, and part of bacteria, fungi, viruses and the like as pathogenic bacteria seriously jeopardize the health and even the life of human beings. For example, highly pathogenic avian influenza virus (H5N1), tuberculosis, SARS, and novel coronavirus (2019-nCoV) are all caused by the spread of bacteria or microorganisms. After suffering from the outbreaks, people pay more and more attention to the harm of bacteria or microorganisms to the health and living environment of people, and the requirements on the quality and the function of products used are higher and higher. Therefore, the development of new antibacterial materials becomes important. The antibacterial polymer material can inhibit and kill microorganisms such as bacteria, fungi and the like present on the antibacterial polymer material, and is widely used in the fields of sanitation, medical treatment, environmental protection and the like.

Polycaprolactam (commonly called nylon or chinlon) has the excellent properties of light weight, high strength, wear resistance, resistance to weak acid, weak base, and some organic solvents, easy forming and processing and the like, and is widely used in the fields of fibers, engineering plastics, films and the like. However, the molecular chain segment of nylon 6 (PA-6) contains amide groups with strong polarity, so that hydrogen bonds are easily formed with water molecules, and the product easily absorbs moisture in the environment, thereby providing a good breeding place for bacteria and fungi. The nylon 6 material is almost ubiquitous in daily life, so that the development of a nylon 6 material with an antibacterial function can effectively reduce or avoid the infection and the transmission of bacteria, and has important significance for improving the living environment of people and reducing diseases.

Currently, commercial antibacterial nylon 6 materials are mainly prepared by blending polycaprolactam and small molecule antibacterial agents, see, for example, CN107652669, CN107793748 and CN108047709, which have many problems in terms of safety, environmental friendliness, and antibacterial efficiency and durability.

Therefore, the development of a novel antibacterial nylon 6 material which is environment-friendly and has lasting and efficient antibacterial performance is of great significance.

Disclosure of the Invention

An object of the present application is to provide a novel nylon 6 material with an antibacterial function, preparation method therefor and application thereof, the nylon 6 material can overcome the defects of poor antibacterial durability, low stability and the like of antibacterial nylon 6 materials obtained by blending, and is low in cost, simple in preparation and suitable for large-scale production.

To achieve the above object, in an aspect, the present application provides an antibacterial nylon 6 material having a structure represented by the following formula (I):

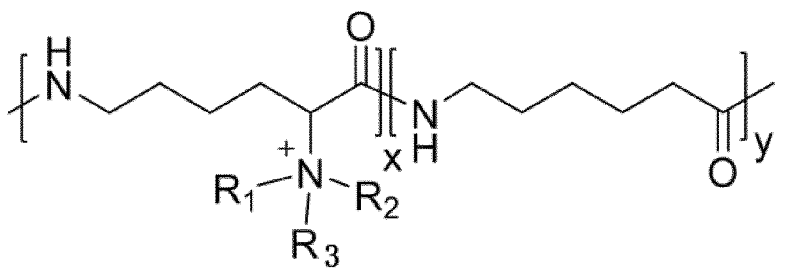

(I)

wherein,

each $R_1$ group and each $R_2$ group are independently selected from the group consisting of $C_{1-24}$ linear or branched aliphatic hydrocarbyl groups, substituted or unsubstituted $C_{3-12}$ alicyclic hydrocarbyl groups, substituted or unsubstituted $C_{6-18}$ aryl groups and substituted or unsubstituted $C_{7-30}$ aralkyl groups, or the $R_1$ and $R_2$ groups on the same nitrogen atom, together with the attached N atom, form a 5-7 membered saturated or unsaturated heterocyclic

ring;

each $R_3$ group is independently selected from the group consisting of hydrogen (H), $C_{1-24}$ linear or branched aliphatic hydrocarbyl groups, substituted or unsubstituted $C_{3-12}$ alicyclic hydrocarbyl groups, substituted or unsubstituted $C_{6-18}$ aryl groups, and substituted or unsubstituted $C_{7-30}$ aralkyl groups; and

x and y respectively represent the molar ratio of the recurring unit having a structure of

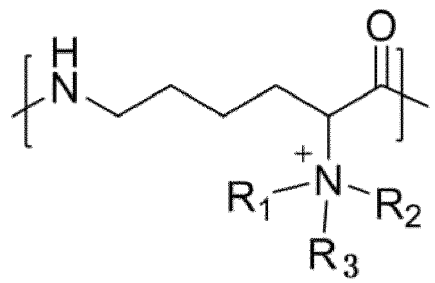

and the molar ratio of the recurring unit having a structure of

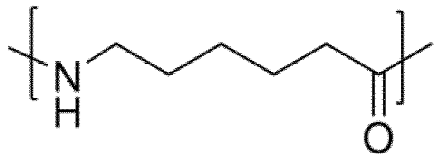

relative to the total amount of recurring units in formula (I), wherein x is in a range of 0.02 to 0.30; y is in a range of 0.70-0.98, and x + y = 1;

wherein the expression "substituted" means that the group is substituted by one or more substituents selected from $C_{1-18}$ linear or branched alkyl groups.

In another aspect, the present application provides a nylon 6 composition comprising from 70 wt% to less than 100 wt% of the antibacterial nylon 6 material according to the present application and from 0 wt% to 30 wt% of at least one polymer comprising a recurring unit having a structure of

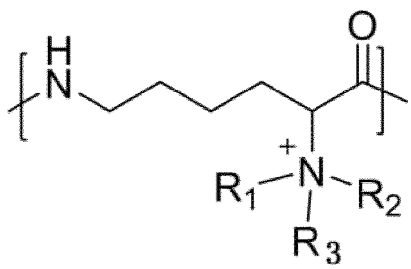

and/or a recurring unit having a structure of

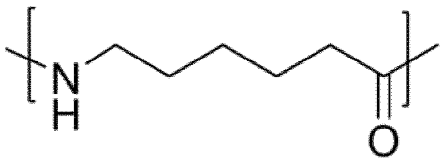

that is different from said antibacterial nylon 6 material, wherein the groups $R_1$, $R_2$ and $R_3$ are as defined hereinabove.

In another aspect, the present application provides a method for preparing an antibacterial nylon 6 material, comprising the steps of:

1) providing a cyclic lysine monomer having a structure represented by the following formula (II),

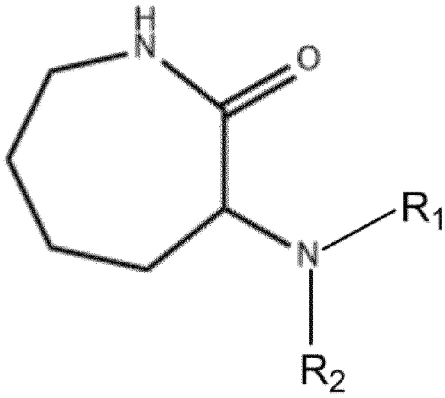

(II),

wherein the $R_1$ and $R_2$ groups are independently selected from the group consisting of $C_{1-24}$ linear or branched aliphatic hydrocarbyl groups, substituted or unsubstituted $C_{3-12}$ alicyclic hydrocarbyl groups, substituted or unsubstituted $C_{6-18}$ aryl groups, and substituted or unsubstituted $C_{7-30}$ aralkyl groups, or the $R_1$ and $R_2$ groups, together with the attached N atom, form a 5-7 membered saturated or unsaturated heterocyclic ring;

2) sujecting the cyclic lysine monomer and a caprolactam monomer to ring-opening polymerization in a molar ratio of 2 : 98 to 30 : 70 to obtain a copolymer having a structure represented by the following formula (III),

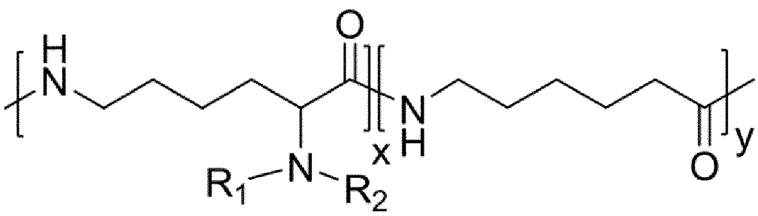

(III),

3) reacting the copolymer with a halide having a structure represented by the following formula (IV),

$R_3$-Hal (IV),

wherein the $R_3$ group is selected from the group consisting of hydrogen (H), $C_{1-24}$ linear or branched aliphatic hydrocarbyl groups, substituted or unsubstituted $C_{3-12}$ alicyclic hydrocarbyl groups, substituted or unsubstituted $C_{6-18}$ aryl groups and substituted or unsubstituted $C_{7-30}$ aralkyl groups,

Hal represents halogen,

to obtain an antibacterial nylon 6 material having a structure represented by the following formula (I),

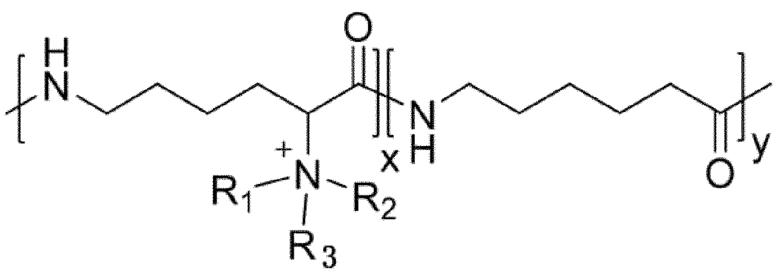

(I),

wherein the expression "substituted" means that the group is substituted by one or more substituents selected from $C_{1-18}$ linear or branched alkyl groups.

The antibacterial nylon 6 material according to the present application has a broad-spectrum and high antibacterial effect, has good antibacterial durability and stability, and can be widely used in textiles, daily necessities, building materials, packaging materials, various panels and the like as a public health material; and is low in cost, simple in preparation and easy for large-scale production.
In yet another aspect, the present application provides an article comprising the antibacterial nylon 6 material according to the present application, the nylon 6 composition according to the present application, or an antibacterial nylon 6 material obtained by the method according to the present application.
Preferably, the article is selected from the group consisting of textiles, daily necessities, building materials, packaging materials and panels.
Other characteristics and advantages of the present application will be described in detail in the detailed description hereinbelow.

Brief Description of the Drawings

The drawings, forming a part of the present description, are provided to help the understanding of the present application, and should not be considered to be limiting. The present application can be interpreted with reference to the drawings in combination with the detailed description hereinbelow. In the drawings:

Fig. 1 is a schematic diagram showing a synthetic route of the antibacterial nylon 6 material according to the present application;
Fig. 2 shows the nuclear magnetic resonance spectrum of the copolymer of dimethyl-protected cyclic lysine monomer and caprolactam monomer obtained in Example 1;
Figs. 3 to 7 are DSC melting point test diagrams of the antibacterial nylon 6 materials obtained in Examples 1 to 5, respectively; and
Figs. 8A and 8B are photographs showing the antibacterial effect of the nylon 6 materials obtained in Comparative Example 1 and Example 5 against staphylococcus aureus, respectively.

Detailed Description of the Invention

The present application will be further described hereinafter in detail with reference to the drawing and specific embodiments thereof. It should be noted that the specific embodiments of the present application are provided for illustration purpose only, and are not intended to be limiting in any manner.
Any specific numerical value, including the endpoints of a numerical range, described in the context of the present application is not restricted to the exact value thereof, but should be interpreted to further encompass all values close to said exact value, for example all values within $\pm 5\%$ of said exact value. Moreover, regarding any numerical range described herein, arbitrary combinations can be made between the endpoints of the range, between each endpoint and any specific value within the range, or between any two specific values within the range, to provide one or more new numerical range(s), where said new numerical range(s) should also be deemed to have been specifically described in the present application.
Unless otherwise stated, the terms used herein have the same meaning as commonly understood by those skilled in the art; and if the terms are defined herein and their definitions are different from the ordinary understanding in the art, the definition provided herein shall prevail.
In the present application, the term "substituted" means that the group is substituted with one or more substituents selected from $C_{1-18}$ linear or branched alkyl groups, preferably $C_{1-12}$ linear or branched alkyl groups, more preferably $C_{1-6}$ linear or branched alkyl groups.
In the context of the present application, in addition to those matters explicitly stated, any matter or matters not mentioned are considered to be the same as those known in the art without any change. Moreover, any of the embodiments described herein can be freely combined with another one or more embodiments described herein, and the technical solutions or ideas thus obtained are considered as part of the original disclosure or original description of the present application, and should not be considered to be a new matter that has not been disclosed or anticipated herein, unless it is clear to the person skilled in the art that such a combination is obviously unreasonable.
All of the patent and non-patent documents cited herein, including but not limited to textbooks and journal articles, are hereby incorporated by reference in their entirety.
As described above, in a first aspect, the present application provides an antibacterial nylon 6 material having a structure represented by the following formula (I):

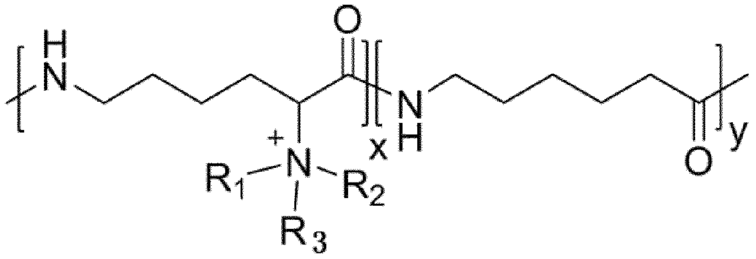

(I)

wherein,

each $R_1$ group and each $R_2$ group are independently selected from the group consisting of $C_{1-24}$ linear or branched aliphatic hydrocarbyl groups, substituted or unsubstituted $C_{3-12}$ alicyclic hydrocarbyl groups, substituted or unsubstituted $C_{6-18}$ aryl groups and substituted or unsubstituted $C_{7-30}$ aralkyl groups, or the $R_1$ and $R_2$ groups on the same nitrogen atom, together with the attached N atom, form a 5-7 membered saturated or unsaturated heterocyclic ring;

each $R_3$ group is independently selected from the group consisting of hydrogen (H), $C_{1-24}$ linear or branched aliphatic hydrocarbyl groups, substituted or unsubstituted $C_{3-12}$ alicyclic hydrocarbyl groups, substituted or unsubstituted $C_{6-18}$ aryl groups, and substituted or unsubstituted $C_{7-30}$ aralkyl groups; and

x and y respectively represent the molar ratio of the recurring unit having a structure of

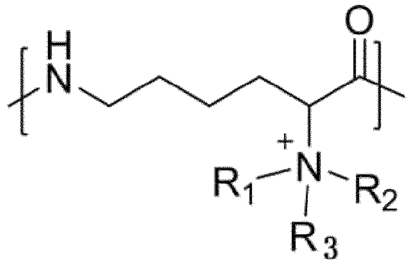

and the molar ratio of the recurring unit having a structure of

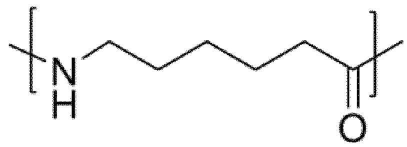

relative to the total amount of recurring units in formula (I), respectively, wherein x is in a range of 0.02 to 0.30; y is in a range of 0.70-0.98, and x + y = 1.

In a preferred embodiment, each $R_1$ group and each $R_2$ group are independently selected from the group consisting of $C_{1-12}$ linear or branched aliphatic hydrocarbyl groups (e.g., $C_{1-8}$ linear or branched aliphatic hydrocarbyl groups, $C_{1-6}$ linear or branched aliphatic hydrocarbyl groups, $C_{1-4}$ linear or branched aliphatic hydrocarbyl groups, such as alkyl or alkenyl groups, preferably alkyl groups), substituted or unsubstituted $C_{3-6}$ alicyclic hydrocarbyl groups, substituted or unsubstituted $C_{6-10}$ aryl groups, and substituted or unsubstituted $C_{7-16}$ aralkyl groups, or the $R_1$ and $R_2$ groups on the same nitrogen atom, together with the attached N atom, form a 5-6 membered saturated or unsaturated heterocyclic ring; and each $R_3$ group is independently selected from the group consisting of hydrogen (H), $C_{1-12}$ linear or branched aliphatic hydrocarbyl groups (e.g., $C_{1-8}$ linear or branched aliphatic hydrocarbyl groups, $C_{1-6}$ linear or branched aliphatic hydrocarbyl groups, $C_{1-4}$ linear or branched aliphatic hydrocarbyl groups, such as alkyl or alkenyl groups, preferably alkyl groups), substituted or unsubstituted $C_{3-6}$ alicyclic hydrocarbyl groups, substituted or unsubstituted $C_{6-10}$ aryl groups, and substituted or unsubstituted $C_{7-16}$ aralkyl groups.

In a further preferred embodiment, each $R_1$ group and each $R_2$ group are independently selected from the group consisting of methyl, ethyl, propyl, butyl, hexyl, octyl, dodecyl, allyl, phenyl and benzyl, or the $R_1$ and $R_2$ groups on the same nitrogen atom, together with the attached N atom, form a tetrahydropyrrolyl or hexahydropyridyl group; and each $R_3$ group is independently selected from the group consisting of hydrogen (H), methyl, ethyl, propyl, butyl, hexyl,

octyl, dodecyl, cyclohexyl, phenyl, and benzyl.

In a still further preferred embodiment, all $R_1$ groups and $R_2$ groups are the same and are selected from the group consisting of methyl, ethyl, propyl, butyl, hexyl, octyl, dodecyl, allyl, and benzyl, or the $R_1$ and $R_2$ groups on the same nitrogen atom, together with the attached N atom, form a tetrahydropyrrolyl or hexahydropyridyl group; and all $R_3$ groups are the same and are selected from the group consisting of hydrogen (H), methyl, ethyl, propyl, butyl, hexyl, octyl, dodecyl, cyclohexyl, and benzyl.

In a particularly preferred embodiment, all $R_1$ groups and $R_2$ groups are the same and are selected from the group consisting of methyl, ethyl, propyl, butyl, dodecyl, allyl, and benzyl, especially ethyl, propyl, butyl, and benzyl, or the $R_1$ and $R_2$ groups on the same nitrogen atom, together with the attached N atom, form a hexahydropyridyl group; and all $R_3$ groups are the same and are selected from the group consisting of hydrogen (H), ethyl, cyclohexyl, and benzyl, especially ethyl.

In a preferred embodiment, x in formula (I) is in a range of 0.03 to 0.25, more preferably 0.04 to 0.20, for example in a range of 0.08 to 0.20, 0.12 to 0.20 or 0.16 to 0.20; y is in a range of 0.75 to 0.97, more preferably 0.80 to 0.96, e.g. in a range of 0.80 to 0.92, 0.88 to 0.80 or 0.84 to 0.80, and x + y = 1.

In a preferred embodiment, the total number of recurring units in the antibacterial nylon 6 material represented by formula (I) is in a range of 10 to 2500, preferably 20 to 1000, more preferably 20 to 500.

In a preferred embodiment, the antibacterial nylon 6 material has a weight average molecular weight of 2000 to 500000, preferably 5000 to 200000, more preferably 5000 to 100000.

In a second aspect, the present application provides a nylon 6 composition comprising from 70 wt% to less than 100 wt% of the antibacterial nylon 6 material according to the present application and from 0 wt% to 30 wt% of at least one polymer comprising a recurring unit having a structure of

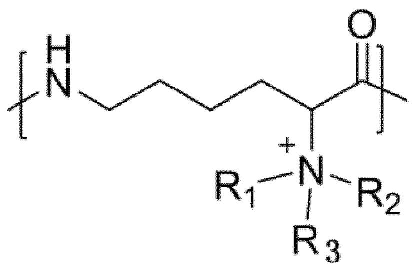

and/or a recurring unit having a structure of

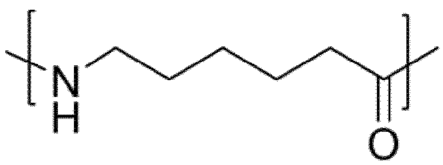

that is different from said antibacterial nylon 6 material, wherein the groups $R_1$, $R_2$ and $R_3$ are as defined hereinabove.

In a preferred embodiment, the nylon 6 composition comprises from 80 wt% to less than 100 wt%, more preferably from 90 wt% to less than 100 wt%, such as 91 wt%, 92 wt%, 93 wt%, 94 wt%, 95 wt%, 96 wt%, 97 wt%, 98 wt%, 99 wt%, of the antibacterial nylon 6 material according to the present application and from more than 0 wt% to 20 wt%, more preferably from more than 0 wt% to 10 wt%, such as 0.1 wt%, 0.2 wt%, 0.3 wt%, 0.4 wt%, 0.5 wt%, 0.6 wt%, 0.7 wt%, 0.8 wt%, 0.9 wt%, 1 wt%, 2 wt%, 3 wt%, 4 wt%, 5 wt%, 6 wt%, 7 wt%, 8 wt%, 9 wt%, of the at least one polymer different from said antibacterial nylon 6 material.

In some particular embodiments, the polymer different from the antibacterial nylon 6 material has a structure similar to formula (I), except that x is outside the range of 0.02-0.30, y is outside the range of 0.70-0.98, and x + y = 1.

In a preferred embodiment, the nylon 6 composition according to the present application further comprises from 0 wt% to 30 w t%, preferably from 0 wt% to 20 wt%, more preferably from 0 wt% to 10 wt%, such as 0.1 wt%, 0.2 wt%, 0.3 wt%, 0.4 wt%, 0.5 wt%, 0.6 wt%, 0.7 wt%, 0.8 wt%, 0.9 wt%, 1 wt%, 2 wt%, 3 wt%, 4 wt%, 5 wt%, 6 wt%, 7 wt%, 8 wt%, 9 wt%, of an additive selected from the group consisting of reinforcing agents, fillers, toughening agents, plasticizers, flame retardants, colorants, optical brighteners, light stabilizers, antioxidants, heat stabilizers, lubricants, mold release agents, and combinations thereof.

Suitable additives for use in the composition of the present application may be any additive conventionally used in nylon production and processing, and there is no particular limitation in the present application. For example, fillers

suitable for use in the composition of the present application may be those commonly used in the art, including, but not limited to, activated calcium carbonate, talc, wollastonite, mica, and the like; antioxidants suitable for use in the composition of the present application can be those commonly used in the art, including, but not limited to, phenolic antioxidants, phosphite antioxidants, and the like.

In a third aspect, the present application provides a method for preparing an antibacterial nylon 6 material, comprising the steps of:

1) providing a cyclic lysine monomer having a structure represented by the following formula (II),

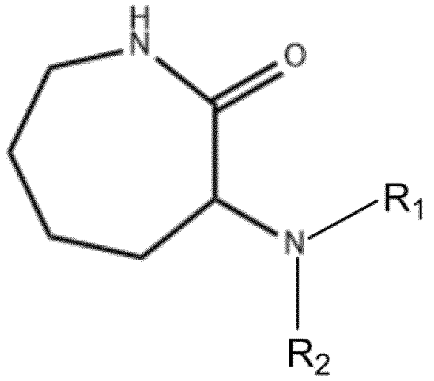

(II),

wherein the $R_1$ and $R_2$ groups are independently selected from the group consisting of $C_{1-24}$ linear or branched aliphatic hydrocarbyl groups, substituted or unsubstituted $C_{3-12}$ alicyclic hydrocarbyl groups, substituted or unsubstituted $C_{6-18}$ aryl groups, and substituted or unsubstituted $C_{7-30}$ aralkyl groups, or the $R_1$ and $R_2$ groups, together with the attached N atom, form a 5-7 membered saturated or unsaturated heterocyclic ring;

2) sujecting the cyclic lysine monomer and a caprolactam monomer to ring-opening polymerization in a molar ratio of 2 : 98 to 30 : 70 to obtain a copolymer having a structure represented by the following formula (III),

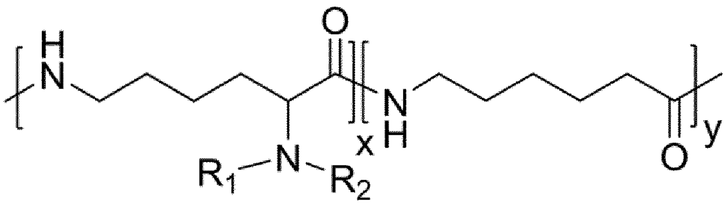

(III),

3) reacting the copolymer with a halide having a structure represented by the following formula (IV),

$R_3$-Hal (IV),

wherein the $R_3$ group is selected from the group consisting of hydrogen (H), $C_{1-24}$ linear or branched aliphatic hydrocarbyl groups, substituted or unsubstituted $C_{3-12}$ alicyclic hydrocarbyl groups, substituted or unsubstituted $C_{6-18}$ aryl groups and substituted or unsubstituted $C_{7-30}$ aralkyl groups,

Hal represents halogen,

to obtain an antibacterial nylon 6 material having a structure represented by the following formula (I),

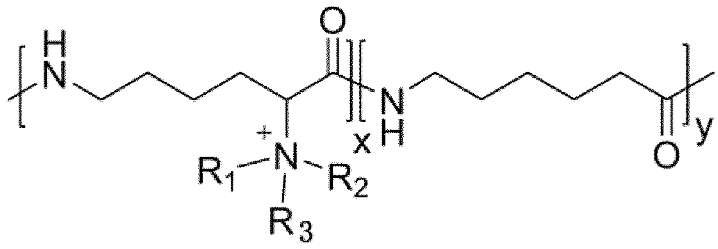

(I).

Fig. 1 shows a schematic diagram of a synthetic route for preparing the antibacterial nylon 6 material according to the present application.

In a preferred embodiment, the $R_1$ and $R_2$ groups are independently selected from the group consisting of $C_{1-12}$ linear or branched aliphatic hydrocarbyl groups (e.g., $C_{1-8}$ linear or branched aliphatic hydrocarbyl groups, $C_{1-6}$ linear or branched aliphatic hydrocarbyl groups, $C_{1-4}$ linear or branched aliphatic hydrocarbyl groups, such as alkyl or alkenyl groups, preferably alkyl groups), substituted or unsubstituted $C_{3-6}$ alicyclic hydrocarbyl groups, substituted or unsubstituted $C_{6-10}$ aryl groups, and substituted or unsubstituted $C_{7-16}$ aralkyl groups, or the $R_1$ and $R_2$ groups, together with the attached N atom, form a 5-6 membered saturated or unsaturated heterocyclic ring; the $R_3$ group is selected from hydrogen (H), $C_{1-12}$ linear or branched aliphatic hydrocarbyl groups (e.g., $C_{1-8}$ linear or branched aliphatic hydrocarbyl groups, $C_{1-6}$ linear or branched aliphatic hydrocarbyl groups, $C_{1-4}$ linear or branched aliphatic hydrocarbyl groups, such as alkyl or alkenyl groups, preferably alkyl groups), substituted or unsubstituted $C_{3-6}$ alicyclic hydrocarbyl groups, substituted or unsubstituted $C_{6-10}$ aryl groups, and substituted or unsubstituted $C_{7-16}$ aralkyl groups; and Hal represents chlorine, bromine or iodine.

In a further preferred embodiment, the $R_1$ and $R_2$ groups are independently selected from the group consisting of methyl, ethyl, propyl, butyl, hexyl, octyl, dodecyl, allyl, phenyl and benzyl, or the $R_1$ and $R_2$ groups, together with the attached N atom, form a tetrahydropyrrolyl or a hexahydropyridyl group; the $R_3$ group is selected from the group consisting of hydrogen (H), methyl, ethyl, propyl, butyl, hexyl, octyl, dodecyl, cyclohexyl, phenyl, and benzyl; and Hal represents chlorine, bromine or iodine.

In a still further preferred embodiment, the $R_1$ and $R_2$ groups are the same and are selected from the group consisting of methyl, ethyl, propyl, butyl, hexyl, octyl, dodecyl, allyl, and benzyl, or the $R_1$ and $R_2$ groups, together with the attached N atom, form a tetrahydropyrrolyl or a hexahydropyridyl group; the $R_3$ group is selected from the group consisting of hydrogen (H), methyl, ethyl, propyl, butyl, hexyl, octyl, dodecyl, cyclohexyl, and benzyl; and Hal represents chlorine, bromine or iodine.

In a particularly preferred embodiment, the $R_1$ and $R_2$ groups are the same and are selected from the group consisting of methyl, ethyl, propyl, butyl, dodecyl, allyl, and benzyl, especially ethyl, propyl, butyl, and benzyl, or the $R_1$ and $R_2$ groups, together with the attached N atom, form a hexahydropyridyl group; the $R_3$ group is selected from the group consisting of hydrogen (H), ethyl, cyclohexyl, and benzyl, especially ethyl; and Hal represents chlorine or bromine, preferably bromine.

In a preferred embodiment of the method according to the present application, the cyclic lysine monomer is provided in step 1) by protecting the primary amine group of the aminocaprolactam represented by formula (V) with a protecting group,

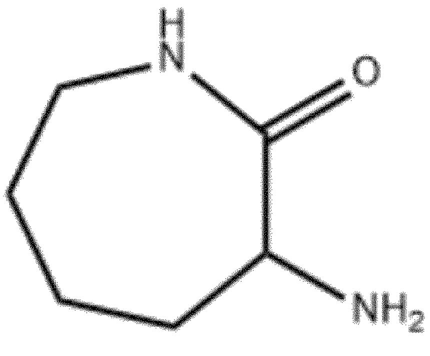

(V).

For example, the protecting groups can be the $R_1$ and $R_2$ groups as defined hereinabove above, and will not be described in detail herein.

In a further preferred embodiment, said step 1) is carried out by reacting said aminocaprolactam with a corresponding aldehyde and/or halogenated hydrocarbon having the $R_1$ and/or $R_2$ group, preferably by reacting said aminocaprolactam with a reagent selected from the group consisting of formaldehyde, acetaldehyde, propionaldehyde, butyraldehyde, benzyl chloride, 1,5-dibromopentane, allyl bromide, dodecyl bromide, or a combination thereof.

In certain still further preferred embodiments, the aminocaprolactam used in step 1) can be prepared from L-lysine hydrochloride by: i) carrying out methyl esterification on L-lysine hydrochloride to obtain a methyl esterified L-lysine, preferably taking methanol as a solvent and a methyl esterification reagent and concentrated sulfuric acid as a catalyst, and reacting under reflux conditions for 8-10 h to obtain the methyl esterified L-lysine; and ii) reacting the methyl esterified L-lysine with a basic solution in a methanol solvent to obtain aminocaprolactam, preferably reacting at room temperature for 10 to 12 h, and then concentrating and recrystallizing to obtain aminocaprolactam.

In a preferred embodiment, the molar ratio of cyclic lysine monomer to caprolactam monomer used in step 2) is from 3 : 97 to 25 : 75, more preferably from 4 : 96 to 20 : 80.

In a preferred embodiment, the step 2) is carried out in the presence of a catalyst, preferably the catalyst is selected from the group consisting of carbene reagents, guanidine reagents, amidine reagents, phosphazene reagents, alkali metals, alkali metal oxides, alkali metal hydroxides, alkali metal hydrides, alkali metal alkoxides, alkaline earth metals, alkaline earth metal oxides, alkaline earth metal hydroxides, alkaline earth metal hydrides, alkaline earth metal alkoxides, or combinations thereof. Further preferably, the catalyst is selected from the group consisting of sodium hydride, potassium hydride, phosphazene base (t-$BuP_4$), potassium tert-butoxide, sodium methoxide, potassium methoxide, DBU (1,8-diazabicyclo[5.4.0]undec-7-ene), TBD (1,5,7-triazabicyclo[4,4,0]dec-5-ene), sodium, potassium, or combinations thereof.

In a further preferred embodiment, the molar ratio of the total amount of cyclic lysine monomer and caprolactam monomer to the catalyst used in the step 2) is: (10-50) : 1, preferably (10-30) : 1.

In a further preferred embodiment, the ring-opening polymerization of step 2) is carried out in the presence of an activator having the following structure:

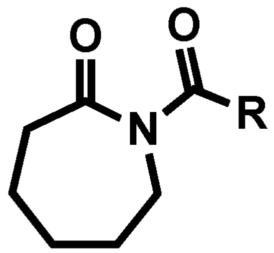

,

wherein R is selected from the group consisting of methyl, ethyl, phenyl, t-butylphenyl and trifluoromethylphenyl.

Still more preferably, the molar ratio of the total amount of the cyclic lysine monomer and caprolactam monomer to the activator used in step 2) is: (10-50) : 1, preferably (10-30) : 1.

In a preferred embodiment, the reaction conditions of step 2) include: a polymerization temperature of 140-180 °C, and a reaction time of 3-6 h.

In a preferred embodiment, the halide having the structure represented by formula (IV) used in step 3) is selected from the group consisting of hydrochloric acid, methyl iodide, ethyl bromide, butyl bromide, hexyl bromide, cyclohexyl bromide, benzyl bromide, or a combination thereof, more preferably selected from hydrochloric acid, ethyl bromide, cyclohexyl bromide, benzyl bromide, or a combination thereof.

In a preferred embodiment, the reaction of step 3) is carried out in a solvent selected from the group consisting of methanol, ethanol, trifluoroethanol, benzyl alcohol, ethylene glycol, cyclohexanol, or a combination thereof, more preferably in a trifluoroethanol solvent. Further preferably, the reaction conditions of step 3) include: a reaction temperature of 40-70 °C, and a reaction time of 10-12 h.

In some preferred embodiments, the step 3) further comprises settling the reaction product of the copolymer and the halide in ethyl acetate, centrifuging, and drying to obtain the antibacterial nylon 6 material.

In a fourth aspect, the present application provides an article comprising the antibacterial nylon 6 material according to the present application, the nylon 6 composition according to the present application, or an antibacterial nylon 6 material obtained by the method according to the present application.

In some preferred embodiments, at least a part of the article is made from the antibacterial nylon 6 material.

In a preferred embodiment, the article is selected from the group consisting of textiles, daily necessities, building materials, packaging materials and panels, such as masks, protective clothing, towels, carpets, cling films, bicycle handles, and the like.

According to the present application, the article or a part thereof can be manufactured using the antibacterial nylon 6 material according to the present application or the nylon 6 composition according to the present application in

a conventional manner, for example, by injection molding, blow molding, extrusion, calendering, and the like, and the operations and conditions thereof are well known to those skilled in the art and can be selected according to actual needs, and will not be described in detail herein.

## Examples

The present application will be further illustrated with reference to the following examples, but the present application is not limited thereto.

Unless otherwise specified, the reagents used in the following examples are commercially available products, and have a purity of analytical grade.

In the following examples and comparative examples, nuclear magnetic resonance spectrums of the aminocaprolactam intermediate and nylon 6 material obtained are measured by a Burker AV-300 liquid superconducting nuclear magnetic resonance spectrometer, using a mixed solvent of deuterated dimethyl sulfoxide and trifluoroacetic acid at room temperature; the weight average molecular weight was measured at room temperature using a Waters515 Gel Permeation Chromatograph (Waters Corporation, USA), using hexafluoroisopropanol containing 0.02 mol/L sodium trifluoroacetate as an eluent.

In the following examples and comparative examples, the melting point of the nylon 6 material obtained was measured by Q2000 DSC7 Differential Scanning Calorimeter (DSC) of TA Instruments, USA, as follows: 5mg of sample was weighed, placed in a sample tank of the DSC7 differential scanning calorimeter, heated from 25 °C to 250 °C under a nitrogen flow of 50ml/min at a heating rate of 10 °C/min, and then the melting point of the sample was detected.

### Example 1

(1) Preparation of aminocaprolactam

546g (3 mol) of L-lysine hydrochloride and 1.5L of methanol were weighed into a 2L three-necked flask, and 176ml (3.3 mol) of concentrated sulfuric acid (98%) was added dropwise using a pressure-equalizing dropping funnel, and mechanically stirred. After the dropping of the concentrated sulfuric acid, the solution was in a clear state and was transferred to a 2L single-necked flask for reaction under reflux conditions for 8 hours to obtain a methyl esterified lysine.

The methyl esterified lysine was transferred into a 50L reaction kettle, 28.5L of methanol was added thereto, further mechanically stirred, a sodium hydroxide solution in methanol (a solution of 480 g sodium hydroxide in 2L methanol) was added dropwise, and then reacted at room temperature for 10-12 h. The resultant was subjected to concentration and recrystallization to obtain an aminocaprolactam with a yield of 80%, which had a purity of 90% according to nuclear magnetic resonance hydrogen spectrum analysis.

(2) Preparation of dimethyl-protected aminocaprolactam

30g (234 mmol) of the aminocaprolactam obtained in step (1) were weighed and dissolved into 500ml of methanol, 42g (514 mmol) of formaldehyde solution (37% by mass) and 3g of 10% palladium on carbon were added and reacted for 24 hours under a hydrogen atmosphere. The resultant was sujbedted to suction filtration, concentration and recrystallization to obtain a dimethyl-protected aminocaprolactam with a yield of 92%, which had a purity of 98% according to nuclear magnetic resonance hydrogen spectrum analysis.

(3) Preparation of antibacterial nylon 6 material

0.5g (3.2 mmol) of the dimethyl-protected aminocaprolactam obtained in step (2), 9.5g (84 mmol) of caprolactam, 0.37 g (1.7 mmol) of N-benzoylcaprolactam activator were weighed into a 25ml round bottom flask, purged at 40 °C for 30min and 70mg (1.7 mmol) sodium hydride was then added for reaction under the protection of nitrogen in a 180 °C oil bath for 6 h.

100ml of trifluoroethanol was added for dissolution, and a part of the resulting material was taken out for nuclear magnetic resonance characterization. The results are shown in Fig. 2: $^1$H NMR (DMSO-$d_6$, 300 MHz) $\delta$ 3.70-3.61, 3.13-3.02, 2.76-2.72, 2.51-2.50, 1.81-1.18.

The mole percentage of the $\varepsilon$-lysine derived copolymerization units in the resulting copolymer was about 4%, which was calculated as the ratio of the integrated area of the peak at the f-position to that of the peak at the h-position in Fig. 2. To the remaining solution, 1g (19.2 mmol) of ethyl bromide was added for reaction in a 40 °C oil bath for 12 h. The reaction solution was settled in ethyl acetate, centrifuged and dried to obtain a cationic poly($\varepsilon$-lysine)-derived antibacterial nylon 6 material having the general formula (I) with a yield of 92%, which had a weight average molecular weight of 8500, and a melting point of 210.6 °C, and its DSC melting point test diagram is shown in Fig. 3. The mole

percentage of the ε-lysine derived copolymerization units in the antibacterial nylon 6 material was about 4%.

Example 2

2g (12.8 mmol) of the dimethyl-protected aminocaprolactam obtained in step (2) of Example 1, 18g (0.16 mol) of caprolactam, 0.54 g (3.5 mmol) of N-formyl caprolactam activator were weighed into a 50ml round bottom flask, purged at 40 °C for 30min, and 0.14g (3.5 mmol) of sodium hydride was then added for reaction under the protection of nitrogen in a 180 °C oil bath for 6 h.

180ml of trifluoroethanol was added for dissolution, and a part of the resulting material was taken out for nuclear magnetic resonance characterization. The results are as follows: $^1H$ NMR (DMSO-$d_6$, 300 MHz) δ 3.70-3.61, 3.13-3.02, 2.76-2.72, 2.51-2.50, 1.81-1.18.

To the remaining solution, 4.2g (38.4 mmol) of bromoethane was added for reaction in a 40 °C oil bath for 12h, the reaction solution was settled in ethyl acetate, centrifuged and dried to obtain a cationic poly(ε-lysine)-derived antibacterial nylon 6 material having the general formula (I) with a yield of 95%, which had a weight average molecular weight of 10000, and a melting point of 199.5 °C, and its DSC melting point test diagram is shown in Fig. 4. The mole percentage of the ε-lysine derived copolymerization units in the antibacterial nylon 6 material was about 8%.

Example 3

3g (19.2 mmol) of the dimethyl-protected aminocaprolactam obtained in step (2) of Example 1, 17g (0.15 mol) of caprolactam, 0.74g (3.4 mmol) of N-benzoylcaprolactam activator were weighed into a 50ml round bottom flask, purged at 40 °C for 30min, and 0.14g (3.4 mmol) of sodium hydride was then added for reaction under the protection of nitrogen in a 180 °C oil bath for 6 h.

150ml of trifluoroethanol was added for dissolution, and a part of the resulting material was taken out for nuclear magnetic resonance characterization. The results are as follows: $^1H$ NMR (DMSO-$d_6$, 300 MHz) δ 3.70-3.61, 3.13-3.02, 2.76-2.72, 2.51-2.50, 1.81-1.18.

To the remaining solution, 6.3g (57.6 mmol) of ethyl bromide was added for reaction in a 40 °C oil bath for 12h, the reaction solution was settled in ethyl acetate, centrifuged and dried to obtain a cationic poly(ε-lysine)-derived antibacterial nylon 6 material having the general formula (I) with a yield of 90%, which had a weight average molecular weight of 12000, and a melting point of 185.7 °C, and its DSC melting point test diagram is shown in Fig. 5. The mole percentage of the ε-lysine derived copolymerization units in the antibacterial nylon 6 material was about 12%.

Example 4

4g (25.6 mmol) of the dimethyl-protected aminocaprolactam obtained in step (2) of Example 1, 16g (0.14 mol) of caprolactam, 0.56 g (3.3 mmol) of N-acetylcaprolactam activator were weighed into a 50ml round bottom flask, purged at 40 °C for 30min, and 0.13g (3.3 mmol) of sodium hydride was then added for reaction under the protection of nitrogen in a 180 °C oil bath for 6 h.

180ml of trifluoroethanol was added for dissolution, and a part of the resulting material was taken out for nuclear magnetic resonance characterization. The results are as follows: $^1H$ NMR (DMSO-$d_6$, 300 MHz) δ 3.70-3.61, 3.13-3.02, 2.76-2.72, 2.51-2.50, 1.81-1.18.

To the remaining solution, 8.4g (77.8 mmol) of bromoethane was added for reaction in a 40 °C oil bath for 12 hours, and the reaction solution was settled in ethyl acetate, centrifuged, and dried to obtain a cationic poly(ε-lysine)-derived antibacterial nylon-6 material having the general formula (I) with a yield of 89%, which had a weight average molecular weight of 15000, and a melting point of 176.3 °C and its DSC melting point test diagram is shown in Fig. 6. The mole percentage of the ε-lysine derived copolymerization units in the antibacterial nylon 6 material was about 16%.

Example 5

5g (32 mmol) of the dimethyl-protected aminocaprolactam obtained in step (2) of Example 1, 15g (0.13 mol) of caprolactam, 0.87g (3.2 mmol) of N-tert-butylbenzoylcaprolactam activator were weighed into a 50ml round bottom flask, purged at 40 °C for 30min, and 0.13g (3.3 mmol) of sodium hydride was then added for reaction under the protection of nitrogen in a 180 °C oil bath for 6 h.

160ml of trifluoroethanol was added for dissolution, and a part of the resulting material was taken out for nuclear magnetic resonance characterization. The results are as follows: $^1H$ NMR (DMSO-$d_6$, 300 MHz) δ 3.70-3.61, 3.13-3.02, 2.76-2.72, 2.51-2.50, 1.81-1.18.

10.5g (96 mmol) of bromoethane was added to the remaining solution for reaction in a 40 °C oil bath for 12h, the reaction solution was settled in ethyl acetate, centrifuged and dried to obtain a cationic poly(ε-lysine)-derived antibacterial nylon 6 material having the general formula (I) with a yield of 85%, which had a weight average molecular weight of 18000, and a melting point of 167.5 °C, and its DSC melting point test diagram is shown in Fig. 7. The mole percentage of the ε-lysine derived copolymerization units in the antibacterial nylon 6 material was about 20%.

Example 6

0.5g (3.2 mmol) of the dimethyl-protected aminocaprolactam obtained in step (2) of Example 1, 9.5g (84 mmol) of caprolactam, 0.48 g (1.7 mmol) of N-trifluoromethylbenzoyl caprolactam activator were weighed into a 25ml round bottom flask, purged at 40 °C for 30min and 70mg (1.7 mmol) of sodium hydride was then added for reaction under the protection of nitrogen in a 180 °C oil bath for 6 h.

100ml of trifluoroethanol was added for dissolution, and a part of the resulting material was taken out for nuclear magnetic resonance characterization. The results are as follows: $^1H$ NMR (DMSO-$d_6$, 300 MHz) δ 3.70-3.61, 3.13-3.02, 2.76-2.72, 2.51-2.50, 1.81-1.18.

To the remaining solution, 100ml of hydrochloric acid solution (6M) was added for reaction at room temperature for 12 hours. The reaction solution was settled in ethyl acetate, centrifuged and dried to obtain a cationic poly(ε-lysine)-derived antibacterial nylon 6 material having the general formula (I) with a yield of 85%, which had a weight average molecular weight of 6000, and a melting point of 212.4 °C. The mole percentage of the ε-lysine derived copolymerization units in the antibacterial nylon 6 material was about 4%.

Example 7

0.5g (3.2 mmol) of dimethyl-protected aminocaprolactam obtained in step (2) of Example 1, 9.5g (84 mmol) of caprolactam, 0.37 g (1.7 mmol) of N-benzoylcaprolactam activator were weighed into a 25ml round bottom flask, purged at 40 °C for 30min, and 70mg (1.7 mmol) of sodium hydride was then added for reaction under the protection of nitrogen in a 180 °C oil bath for 6 h.

100ml of trifluoroethanol was added for dissolution, and a part of the resulting material was taken out for nuclear magnetic resonance characterization. The results are as follows: $^1H$ NMR (DMSO-$d_6$, 300 MHz) δ 3.70-3.61, 3.13-3.02, 2.76-2.72, 2.51-2.50, 1.81-1.18.

To the remaining solution, 15.6g (96 mmol) of bromocyclohexane were added for reaction in a 40 °C oil bath for 12h. The reaction solution was settled in ethyl acetate, centrifuged and dried to obtain a cationic poly(ε-lysine)-derived antibacterial nylon 6 material having the general formula (I) with a yield of 95%, which had a weight average molecular weight of 20000, and a melting point of 208.6 °C. The mole percentage of the ε-lysine derived copolymerization units in the antibacterial nylon 6 material was about 4%.

Example 8

0.5g (3.2 mmol) of dimethyl-protected aminocaprolactam obtained in step (2) of Example 1, 9.5g (84 mmol) of caprolactam, 0.37 g (1.7 mmol) of N-benzoylcaprolactam activator were weighed into a 25ml round bottom flask, purged at 40 °C for 30min, and 70mg (1.7 mmol) of sodium hydride was then added for reaction under the protection of nitrogen in a 180 °C oil bath for 6 h.

100ml of trifluoroethanol was added for dissolution, and a part of the resulting material was taken out for nuclear magnetic resonance characterization. The results are as follows: $^1H$ NMR (DMSO-$d_6$, 300 MHz) δ 3.70-3.61, 3.13-3.02, 2.76-2.72, 2.51-2.50, 1.81-1.18.

To the remaining solution, 16.4g (96 mmol) of benzyl bromide were added for reaction in a 40 °C oil bath for 12 h. The reaction solution was settled in ethyl acetate, centrifuged and dried to obtain a cationic poly(ε-lysine)-derived antibacterial nylon 6 material having the general formula (I) with a yield of 98%, which had a weight average molecular weight of 50000, and a melting point of 206.3 °C. The mole percentage of the ε-lysine derived copolymerization units in the antibacterial nylon 6 material was about 4%.

Example 9

(1) Preparation of diethyl-protected aminocaprolactam

30g (234 mmol) of aminocaprolactam were weighed and dissolved into 500ml of methanol, 56.6g (514 mmol) of an acetaldehyde solution (40% by mass) and 3g of 10% palladium on carbon were added, and the mixture was reacted under hydrogen for 24 hours. The resultant was subjected to suction filtration, concentration and recrystallization to obtain a diethyl-protected aminocaprolactam with a yield of 88%, which had a purity of 95% according to nuclear magnetic resonance hydrogen spectrum analysis.

(2) Preparation of antibacterial nylon 6 material

0.59g (3.2 mmol) of the diethyl-protected aminocaprolactam obtained in step (1), 9.5g (84 mmol) of caprolactam, 0.37 g (1.7 mmol) of N-benzoylcaprolactam activator were weighed into a 25ml round bottom flask, purged at 40 °C for 30min, and 70mg (1.7 mmol) of sodium hydride was then added for reaction under the protection of nitrogen in a 180 °C oil bath for 6 h.

100ml of trifluoroethanol was added for dissolution, and a part of the resulting material was taken out for nuclear magnetic resonance characterization. The results are as follows: $^1$H NMR (DMSO-$d_6$, 300 MHz) $\delta$ 3.75-3.63, 3.34-3.12, 2.78-2.62, 2.50-2.40, 1.61-1.28.

To the remaining solution, 1g (19.2 mmol) of ethyl bromide was added for reaction in a 40 °C oil bath for 12 h. The reaction solution was settled in ethyl acetate, centrifuged and dried to obtain a cationic poly($\varepsilon$-lysine)-derived antibacterial nylon 6 material having the general formula (I) with a yield of 82%, which had a weight average molecular weight of 13000, and a melting point of 208.2 °C. The mole percentage of the $\varepsilon$-lysine derived copolymerization units in the antibacterial nylon 6 material was about 4%.

Example 10

(1) Preparation of dipropyl-protected aminocaprolactam

30g (234 mmol) of aminocaprolactam were weighed and dissolved into 500ml of methanol, 29.9g (514 mmol) of propionaldehyde and 3g of 10% palladium on carbon were added and the mixture was reacted under hydrogen for 24 hours. The resultant was subjected to suction filtration, concentration and recrystallization to obtain a dipropyl-protected aminocaprolactam with a yield of 89%, which had a purity of 97% according to the nuclear magnetic resonance hydrogen spectrum analysis.

(2) Preparation of antibacterial nylon 6 material

0.68g (3.2 mmol) of the dipropyl-protected aminocaprolactam obtained in step (1), 9.5g (84 mmol) of caprolactam, 0.37 g (1.7 mmol) of N-benzoylcaprolactam activator were weighed into a 25ml round bottom flask, purged at 40 °C for 30min, and 70mg (1.7 mmol) of sodium hydride was then added for reaction under the protection of nitrogen in a 180 °C oil bath for 6 h.

100ml of trifluoroethanol was added for dissolution, and a part of the resulting material was taken out for nuclear magnetic resonance characterization. The results are as follows: $^1$H NMR (DMSO-$d_6$, 300 MHz) $\delta$ 3.85-3.53, 3.30-3.10, 2.88-2.52, 2.40-2.28, 1.71-1.18.

To the remaining solution, 1g (19.2 mmol) of ethyl bromide was added for reaction in a 40 °C oil bath for 12 h. The reaction solution was settled in ethyl acetate, centrifuged and dried to obtain a cationic poly($\varepsilon$-lysine)-derived antibacterial nylon 6 material having the general formula (I) with a yield of 93%, which had a weight average molecular weight of 18000, and a melting point of 201.7 °C. The mole percentage of the $\varepsilon$-lysine derived copolymerization units in the antibacterial nylon 6 material was about 4%.

Example 11

(1) Preparation of dibutyl-protected aminocaprolactam

30g (234 mmol) of aminocaprolactam were dissolved in 500ml of methanol, and 37.1g (514 mmol) of butyraldehyde and 3g of 10% palladium on carbon were added and reacted under hydrogen for 24 hours. The resultant was subjected to suction filtration, concentration and recrystallization to obtain the dibutyl-protected aminocaprolactam with a yield of 86%, which had a purity of 96% according to nuclear magnetic resonance hydrogen spectrum analysis.

(2) Preparation of antibacterial nylon 6 material

0.77g (3.2 mmol) of dibutyl-protected aminocaprolactam obtained in step (1), 9.5g (84 mmol) of caprolactam, 0.37 g (1.7 mmol) of N-benzoylcaprolactam activator were weighed into a 25ml round bottom flask, purged at 40 °C for 30min, and 70mg (1.7 mmol) of sodium hydride was then added for reaction under the protection of nitrogen in a 180 °C oil bath for 6 h.

100ml of trifluoroethanol was added for dissolution, and a part of the resulting material was taken out for nuclear magnetic resonance characterization. The results are as follows: $^1$H NMR (DMSO-$d_6$, 300 MHz) $\delta$ 3.95-3.73, 3.30-3.10, 2.58-2.42, 2.30-2.10, 1.60-1.08.

To the remaining solution, 1g (19.2 mmol) of ethyl bromide was added for reaction in a 40 °C oil bath for 12 h. The reaction solution was settled in ethyl acetate, centrifuged and dried to obtain a cationic poly(ε-lysine)-derived antibacterial nylon 6 material having the general formula (I) with a yield of 86%, which had a weight average molecular weight of 25000, and a melting point of 201.1 °C. The mole percentage of the ε-lysine derived copolymerization units in the antibacterial nylon 6 material was about 4%.

Example 12

(1) Preparation of dibenzyl-protected aminocaprolactam

30g (234 mmol) of aminocaprolactam were weighed into 500ml of acetonitrile, 56ml (491 mmol) of benzyl chloride and 46.8g (351 mmol) of potassium carbonate were added for reaction under stirring at 80 °C for 6 h. The resultant was washed with 1M HCl, extracted with dichloromethane, dried with anhydrous sodium sulfate, and then subjected to suction filtration, concentration and recrystallization to obtain dibenzyl-protected aminocaprolactam with a yield of 85%, which had a purity of 95% according to nuclear magnetic resonance hydrogen spectrum analysis.

(2) Preparation of antibacterial nylon 6 material

0.99 g (3.2 mmol) of the dibenzyl-protected aminocaprolactam obtained in step (1), 9.5g (84 mmol) of caprolactam, 0.37 g (1.7 mmol) of N-benzoyl caprolactam activator were weighed into a 25ml round bottom flask, purged at 40 °C for 30min, and 70mg (1.7 mmol) of sodium hydride was then added for reaction under the protection of nitrogen in a 180 °C oil bath for 6 h.

100ml of trifluoroethanol was added for dissolution, and a part of the resulting material was taken out for nuclear magnetic resonance characterization. The results are as follows: $^1$H NMR (DMSO-$d_6$, 300 MHz) δ 7.35-7.12, 5.52-5.36, 3.75-3.63, 3.24-3.10, 2.51-2.38, 1.81-1.28.

To the remaining solution, 1g (19.2 mmol) of ethyl bromide was added for reaction in a 40 °C oil bath for 12 h. The reaction solution was settled in ethyl acetate, centrifuged and dried to obtain a cationic poly(ε-lysine)-derived antibacterial nylon 6 material having the general formula (I) with a yield of 93%, which had a weight average molecular weight of 50000, and a melting point of 196.5 °C. The mole percentage of the ε-lysine derived copolymerization units in the antibacterial nylon 6 material was about 4%.

Example 13

(1) Preparation of N,N-hexahydropyridyl aminocaprolactam

30g (234 mmol) of aminocaprolactam were weighed into 500ml of acetonitrile, 80.7g (351 mmol) of 1,5-dibromopentane and 46.8g (351 mmol) of potassium carbonate were added for reaction under stirring at 80 °C for 6 h. The resultant was washed with 1M HCl,extracted with dichloromethane, dried with anhydrous sodium sulfate, and then subjected to suction filtration, concentration and recrystallization to obtain N,N-hexahydropyridyl aminocaprolactam with a yield of 75%, which had a purity of 90% according to nuclear magnetic resonance hydrogen spectrum analysis.

(2) Preparation of antibacterial nylon 6 material

0.63 g (3.2 mmol) N,N-hexahydropyridyl aminocaprolactam, 9.5g (84 mmol) caprolactam, 0.37 g (1.7 mmol) N-benzoylcaprolactam activator were weighed into a 25ml round bottom flask, purged at 40 °C for 30min, and 70mg (1.7 mmol) of sodium hydride was then added for reaction under the protection of nitrogen in a 180 °C oil bath for 6 h.

100ml of trifluoroethanol was added for dissolution, and a part of the resulting material was taken out for nuclear magnetic resonance characterization. The results are as follows: $^1$H NMR (DMSO-$d_6$, 300 MHz) δ 5.53-5.31, 3.70-3.53, 3.32-3.12, 2.55-2.40, 1.61-1.18.

To the remaining solution, 1g (19.2 mmol) of ethyl bromide was added for reaction in a 40 °C oil bath for 12 h. The reaction solution was settled in ethyl acetate, centrifuged and dried to obtain a cationic poly(ε-lysine)-derived antibacterial nylon 6 material having the general formula (I) with a yield of 88%, which had a weight average molecular weight of 20000, and a melting point of 193.8 °C. The mole percentage of the ε-lysine derived copolymerization units in the antibacterial nylon 6 material was about 4%.

Example 14

(1) Preparation of diallyl-protected aminocaprolactam

30g (234 mmol) of aminocaprolactam were weighed into 500ml of acetonitrile, 59.4g (491 mmol) of allyl bromide and 46.8g (351 mmol) of potassium carbonate were added for reaction under stirring at 80 °C for 6 h. The resultant was washed with 1M HCl, extracted with dichloromethane, dried with anhydrous sodium sulfate, and then subjected to suction filtration, concentration and recrystallization to obtain diallyl-protected aminocaprolactam with a yield of 78%, which had a purity of 97% according to nuclear magnetic resonance hydrogen spectrum analysis.

(2) Preparation of antibacterial nylon 6 material

0.67 g (3.2 mmol) of diallyl-protected aminocaprolactam, 9.5g (84 mmol) of caprolactam, 0.37 g (1.7 mmol) of N-benzoylcaprolactam activator were weighed into a 25ml round bottom flask, purged at 40 °C for 30min, and 70mg (1.7 mmol) of sodium hydride was then added for reaction under the protection of nitrogen in a 180 °C oil bath for 6 h.

100ml of trifluoroethanol was added for dissolution, and a part of the resulting material was taken out for nuclear magnetic resonance characterization. The results are as follows: $^1H$ NMR (DMSO-$d_6$, 300 MHz) $\delta$ 4.53-4.23,3.95-3.73, 3.44-3.22, 2.53-2.40, 1.81-1.38.

To the remaining solution, 1g (19.2 mmol) of ethyl bromide was added for reaction in a 40 °C oil bath for 12 h. The reaction solution was settled in ethyl acetate, centrifuged and dried to obtain a cationic poly($\varepsilon$-lysine)-derived antibacterial nylon 6 material having the general formula (I) with a yield of 92%, which had a weight average molecular weight of 18000, and a melting point of 200.3 °C. The mole percentage of the $\varepsilon$-lysine derived copolymerization units in the antibacterial nylon 6 material was about 4%.

Example 15

(1) Preparation of didodecyl-protected aminocaprolactam

30g (234 mmol) of aminocaprolactam were weighed into 500ml of acetonitrile, 122.4g (491 mmol) of dodecylbromide and 46.8g (351 mmol) of potassium carbonate were added for reaction under stirring at 80 °C for 6 h. The resultant was washed with 1M HCl, extracted with dichloromethane, dried with anhydrous sodium sulfate, and then subjected to suction filtration, concentration and recrystallization to obtain didodecyl-protected aminocaprolactam with a yield of 70%, which had a purity of 90% according to nuclear magnetic resonance hydrogen spectrum analysis.

(2) Preparation of antibacterial nylon 6 material

1.49 g (3.2 mmol) of the didodecyl-protected aminocaprolactam obtained in step (1), 9.5g (84 mmol) of caprolactam, 0.37 g (1.7 mmol) of N-benzoylcaprolactam activator were weighed into a 25ml round bottom flask, purged at 40 °C for 30min, and 70mg (1.7 mmol) of sodium hydride was then added for reaction under the protection of nitrogen in a 180 °C oil bath for 6 h.

100ml of trifluoroethanol was added for dissolution, and a part of the resulting material was taken out for nuclear magnetic resonance characterization. The results are as follows: $^1H$ NMR (DMSO-$d_6$, 300 MHz) $\delta$ 3.65-3.43, 3.24-3.02, 2.758-2.32, 2.20-2.06, 1.51-1.18.

To the remaining solution, 1g (19.2 mmol) of ethyl bromide was added for reaction in a 40 °C oil bath for 12 h. The reaction solution was settled in ethyl acetate, centrifuged and dried to obtain a cationic poly($\varepsilon$-lysine)-derived antibacterial nylon 6 material having the general formula (I) with a yield of 89%, which had a weight average molecular weight of 80000, and a melting point of 185.6 °C. The mole percentage of the $\varepsilon$-lysine derived copolymerization units in the antibacterial nylon 6 material was about 4%.

Comparative Example 1

9.5g (84 mmol) caprolactam and 0.37 g (1.7 mmol) N-benzoyl caprolactam activator were weighed into a 25ml round bottom flask, purged at 40 °C for 30min, and 70mg (1.7 mmol) of sodium hydride was then added for reaction under the protection of nitrogen in a 180 °C oil bath for 6 h, to obtain a conventional nylon 6 material, which had a melting point of 222.3 °C.

Comparative Example 2

0.25 g (1.6 mmol) of dimethyl-protected aminocaprolactam obtained in step (2) of Example 1, 36.2g (320 mmol) of caprolactam, 1.41 g (6.5 mmol) of N-benzoylcaprolactam activator were weighed into a 25ml round bottom flask, purged at 40 °C for 30min, and 260mg (6.5 mmol) of sodium hydride was then added for reaction under the protection of nitrogen in a 180 °C oil bath for 6 h.

100ml of trifluoroethanol was added for dissolution, and a part of the resulting material was taken out for nuclear magnetic resonance characterization. The results are as follows: $^1H$ NMR (DMSO-$d_6$, 300 MHz) $\delta$ 3.70-3.61, 3.13-3.02, 2.76-2.72, 2.51-2.50, 1.81-1.18.

To the remaining solution, 1g (19.2 mmol) of ethyl bromide was added for reaction in a 40 °C oil bath for 12 h. The reaction solution was settled in ethyl acetate, centrifuged and dried to obtain a cationic poly($\varepsilon$-lysine)-derived modified nylon 6 material with a yield of 98%, which had a weight average molecular weight of 50000, and a melting point of 219.5 °C. The mole percentage of the $\varepsilon$-lysine derived copolymerization units in the modified nylon 6 material was about 0.5%.

Comparative Example 3

15.6g (100 mmol) of the dimethyl-protected aminocaprolactam obtained in step (2) of Example 1, 11.3g (100 mmol) of caprolactam, 0.87 g (4 mmol) of N-benzoylcaprolactam activator were weighed into a 25ml round bottom flask, purged at 40 °C for 30min, and 160mg (4 mmol) of sodium hydride was then added for reaction under the protection of nitrogen in a 180 °C oil bath for 6 h.

100ml of trifluoroethanol was added for dissolution, and a part of the resulting material was taken out for nuclear magnetic resonance characterization. The results are as follows: $^1H$ NMR (DMSO-$d_6$, 300 MHz) $\delta$ 3.70-3.61, 3.13-3.02, 2.76-2.72, 2.51-2.50, 1.81-1.18.

To the remaining solution, 65.3g (600 mmol) of ethyl bromide were added and reacted in a 40 °C oil bath for 12h. The reaction solution was settled in ethyl acetate, centrifuged, and dried to obtain a cationic poly($\varepsilon$-lysine)-derived modified nylon 6 material with a yield of 60%, which had a weight-average molecular weight of 13500, and had no measured melting point as being a amorphous material. The mole percentage of the $\varepsilon$-lysine derived copolymerization units in the modified nylon 6 material was about 40%.

Table 1 Structural characteristics of the nylon 6 materials obtained in the examples and comparative examples

| Example No. | $R_1$ | $R_2$ | $R_3$ | x | y |
|---|---|---|---|---|---|
| Example 1 | Methyl | Methyl | Ethyl | 0.04 | 0.96 |
| Example 2 | Methyl | Methyl | Ethyl | 0.08 | 0.92 |
| Example 3 | Methyl | Methyl | Ethyl | 0.12 | 0.88 |
| Example 4 | Methyl | Methyl | Ethyl | 0.16 | 0.84 |
| Example 5 | Methyl | Methyl | Ethyl | 0.20 | 0.8 |
| Example 6 | Methyl | Methyl | Hydrogen (H) | 0.04 | 0.96 |
| Example 7 | Methyl | Methyl | Cyclohexyl | 0.04 | 0.96 |
| Example 8 | Methyl | Methyl | Benzyl | 0.04 | 0.96 |
| Example 9 | Ethyl | Ethyl | Ethyl | 0.04 | 0.96 |
| Example 10 | Propyl radical | Propyl radical | Ethyl | 0.04 | 0.96 |
| Example 11 | Butyl radical | Butyl radical | Ethyl | 0.04 | 0.96 |
| Example 12 | Benzyl radical | Benzyl radical | Ethyl | 0.04 | 0.96 |
| Example 13 | Forming a hexahydro-pyridyl group together with the attached N atom | | Ethyl | 0.04 | 0.96 |
| Example 14 | Allyl | Allyl | Ethyl | 0.04 | 0.96 |
| Example 15 | Dodecyl | Dodecyl | Ethyl | 0.04 | 0.96 |
| Comparative Example 1 | - | - | - | 0 | 1 |

(continued)

| Example No. | $R_1$ | $R_2$ | $R_3$ | x | y |
|---|---|---|---|---|---|
| Comparative Example 2 | Methyl | Methyl | Ethyl | 0.005 | 0.995 |
| Comparative Example 3 | Methyl | Methyl | Ethyl | 0.4 | 0.6 |

Test of Antibacterial Effect

The antibacterial effect of the materials was tested according to the Chinese National Standard GB/T 31402-2015, with the time and temperature for culturing being adjusted according to the actual situation, as follows: the antibacterial nylon 6 materials obtained in Examples 1-15 and the nylon 6 materials obtained in Comparative Examples 1-3 were respectively pressed into square sheets of 0.75cm×0.75cm, sterilized by irradiation under an ultraviolet lamp for 30min, then a pre-made bacterial solution was dropped on the sheets, and the sheets were covered with a PE film, and incubated at 37 °C for 6 h. After thant, the bacterial solution was subjected to ultrasonic treatment for 3min, diluted by 100 times, and cultured on solid nutrient medium at 37 °C for 20 h. The conventional nylon 6 material obtained in Comparative Example 1 was used as a control. The bacteria used for the test were Staphylococcus aureus (S. aureus) ATCC6538 and Escherichia coli (E. coli) ATCC25922. The test results are shown in Table 2.

The antibacterial rate was calculated using the following equation:

$$\text{Antibacterial rate} = \frac{\text{Number of bacterial colony of the control group} - \text{Number of bacterial colony of the test sample}}{\text{Number of bacterial colony of the control group}} \times 100\%$$

Test of Mechanical Property

The antibacterial nylon 6 materials obtained in Examples 1 to 15 and the nylon 6 materials obtained in Comparative Examples 1 to 3 were injection-molded into bars of 40mm×4mm×2mm, respectively, and tested for tensile properties. The test results are shown in Table 2.

Table 2 Antibacterial efficiency and tensile properties of nylon 6 materials obtained in the examples and comparative examples

| Example No. | Antibacterial efficiency | | Tensile properties | |
|---|---|---|---|---|
| | Antibacterial rate for S. aureus (%) | Antibacterial rate for E. coli (%) | Tensile strength (MPa) | Elongation at break (%) |
| Example 1 | 32.8 | 26.4 | 75 | 19 |
| Example 2 | 57.6 | 53.8 | 73 | 18 |
| Example 3 | 68.3 | 65.7 | 72 | 16 |
| Example 4 | 80.7 | 76.2 | 71 | 14 |
| Example 5 | 96.8 | 90.5 | 70 | 13 |
| Example 6 | 15.2 | 12.3 | 60 | 8 |
| Example 7 | 28.5 | 21.6 | 71 | 19 |
| Example 8 | 35.7 | 33.2 | 72 | 16 |
| Example 9 | 66.8 | 45.4 | 71 | 20 |

(continued)

| Example No. | Antibacterial efficiency | | Tensile properties | |
|---|---|---|---|---|
| | Antibacterial rate for S. | Antibacterial rate for E. coli | Tensile strength | Elongation at break |
| | aureus (%) | (%) | (MPa) | (%) |
| Example 10 | 76.6 | 62.8 | 68 | 16 |
| Example 11 | 62.3 | 29.7 | 68 | 18 |
| Example 12 | 82.3 | 69.7 | 70 | 19 |
| Example 13 | 95.7 | 89.2 | 73 | 12 |
| Example 14 | 40.5 | 37.3 | 66 | 13 |
| Example 15 | 60.2 | 54.9 | 67 | 15 |
| Comparative Example 1 | 0 | 0 | 79 | 21 |
| Comparative Example 2 | 3.2 | 1.2 | 77 | 20 |
| Comparative Example 3 | 98.5 | 95.6 | 12 | 6 |

As shown by the data of Table 2, the antibacterial nylon 6 material of the present application has a significant antibacterial effect, and mechanical properties substantially equivalent to those of conventional nylon 6 material. In contrast, the nylon 6 material of Comparative Example 2 has insufficient antibacterial capability, and the nylon 6 material of Comparative Example 3 has inferior mechanical properties.

Figs. 8A and 8B are photographs showing a comparison between the antibacterial effects of the nylon 6 materials obtained in Comparative Example 1 and Example 5 against Staphylococcus aureus, in which the spots shown are viable colonies. As is apparent from the figures, the antibacterial nylon 6 material of the present application has a significant inhibitory effect on Staphylococcus aureus, as compared to the conventional nylon 6 material obtained in Comparative Example 1.

The present application is illustrated in detail hereinabove with reference to preferred embodiments, but is not intended to be limited to those embodiments. Various modifications may be made following the inventive concept of the present application, and these modifications shall be within the scope of the present application.

It should be noted that the various technical features described in the above embodiments may be combined in any suitable manner without contradiction, and in order to avoid unnecessary repetition, various possible combinations are not described in the present application, but such combinations shall also be within the scope of the present application.

In addition, the various embodiments of the present application can be arbitrarily combined as long as the combination does not depart from the spirit of the present application, and such combined embodiments should be considered as the disclosure of the present application.

## Claims

1. An antibacterial nylon 6 material, having a structure represented by the following formula (I):

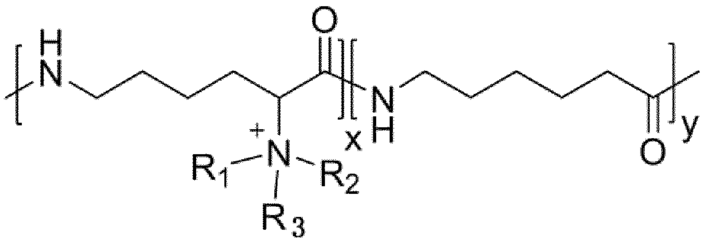

(I)

wherein,

each $R_1$ group and each $R_2$ group are independently selected from the group consisting of $C_{1-24}$ linear or branched aliphatic hydrocarbyl groups, substituted or unsubstituted $C_{3-12}$ alicyclic hydrocarbyl groups, substituted or unsubstituted $C_{6-18}$ aryl groups and substituted or unsubstituted $C_{7-30}$ aralkyl groups, or the $R_1$ and $R_2$ groups on the same nitrogen atom, together with the attached N atom, form a 5-7 membered saturated or unsaturated heterocyclic ring;
each $R_3$ group is independently selected from the group consisting of hydrogen (H), $C_{1-24}$ linear or branched aliphatic hydrocarbyl groups, substituted or unsubstituted $C_{3-12}$ alicyclic hydrocarbyl groups, substituted or unsubstituted $C_{6-18}$ aryl groups, and substituted or unsubstituted $C_{7-30}$ aralkyl groups; and
x and y respectively represent the molar ratio of the recurring unit having a structure of

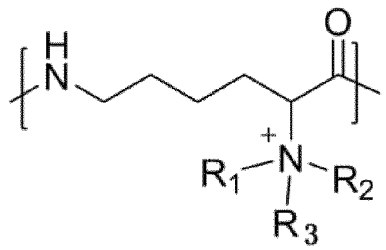

and the molar ratio of the recurring unit having a structure of

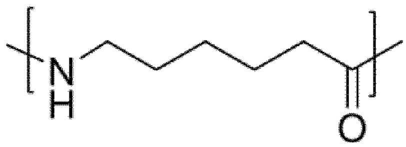

relative to the total amount of recurring units in formula (I), wherein x is in a range of 0.02 to 0.30, preferably 0.03 to 0.25, more preferably 0.04 to 0.20; y is in a range of 0.70-0.98, preferably 0.75-0.97, more preferably 0.80-0.96, and x + y = 1;
wherein the expression "substituted" means that the group is substituted by one or more substituents selected from the group consisting of $C_{1-18}$ linear or branched alkyl groups, preferably $C_{1-12}$ linear or branched alkyl groups, more preferably $C_{1-6}$ linear or branched alkyl groups.

**2.** The antibacterial nylon 6 material of claim 1, wherein:

each $R_1$ group and each $R_2$ group are independently selected from the group consisting of $C_{1-12}$ linear or branched aliphatic hydrocarbyl groups, substituted or unsubstituted $C_{3-6}$ alicyclic hydrocarbyl groups, substituted or unsubstituted $C_{6-10}$ aryl groups, and substituted or unsubstituted $C_{7-16}$ aralkyl groups, or the $R_1$ and $R_2$ groups on the same nitrogen atom, together with the attached N atom, form a 5-6 membered saturated or unsaturated heterocyclic ring, preferably each $R_1$ group and each $R_2$ group are independently selected from the group consisting of methyl, ethyl, propyl, butyl, hexyl, octyl, dodecyl, allyl, phenyl, and benzyl, or the $R_1$ and $R_2$ groups on the same nitrogen atom, together with the attached N atom, form a tetrahydropyrrolyl or hexahydropyridyl group; and
each $R_3$ group is independently selected from the group consisting of hydrogen (H), $C_{1-12}$ linear or branched aliphatic hydrocarbyl groups, substituted or unsubstituted $C_{3-6}$ alicyclic hydrocarbyl groups, substituted or unsubstituted $C_{6-10}$ aryl groups and substituted or unsubstituted $C_{7-16}$ aralkyl groups, preferably each $R_3$ group is independently selected from the group consisting of hydrogen (H), methyl, ethyl, propyl, butyl, hexyl, octyl, dodecyl, cyclohexyl, phenyl and benzyl.

**3.** The antibacterial nylon 6 material of claim 1 or 2, wherein:

the total number of recurring units in formula (I) is in a range of from 10 to 2500, preferably from 20 to 1000, more preferably from 20 to 500; and/or
the antibacterial nylon 6 material has a weight average molecular weight of 2000-500000, preferably 5000-200000, and more preferably 5000-100000.

**4.** A nylon 6 composition, comprising from 70 wt% to less than 100 wt%, preferably from 80 wt% to less than 100 wt%, more preferably from 90 wt% to less than 100 wt% of the antibacterial nylon 6 material according to any one of claims 1-3 and from 0 wt% to 30 wt%, preferably from more than 0 wt% to 20 wt%, more preferably from more than 0 wt% to 10 wt% of at least one polymer comprising a recurring unit having the structure of

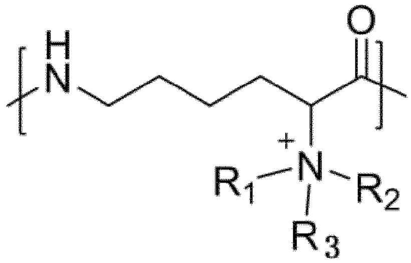

and/or a recurring unit having the structure of

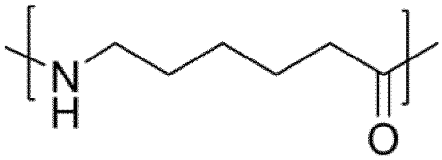

that is different from said antibacterial nylon 6 material, wherein the groups $R_1$, $R_2$ and $R_3$ are as defined in claim 1.

**5.** The nylon 6 composition of claim 4, further comprising 0-30 w t%, preferably 0-20 wt%, more preferably 0-10 wt% of an additive selected from the group consisting of reinforcing agents, fillers, toughening agents, plasticizers, flame retardants, colorants, optical brighteners, light stabilizers, antioxidants, heat stabilizers, lubricants, mold release agents, and combinations thereof.

**6.** A method for preparing an antibacterial nylon 6 material, comprising the following steps:

1) providing a cyclic lysine monomer having a structure represented by the following formula (II),

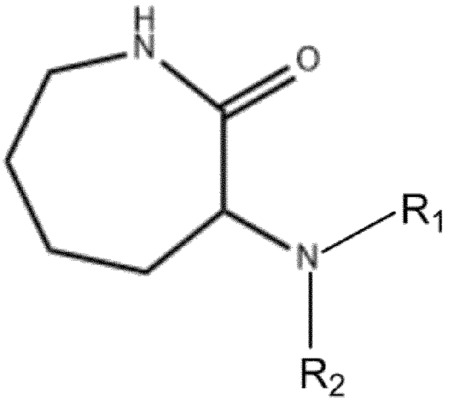

(II),

wherein the $R_1$ and $R_2$ groups are independently selected from the group consisting of $C_{1-24}$ linear or branched aliphatic hydrocarbyl groups, substituted or unsubstituted $C_{3-12}$ alicyclic hydrocarbyl groups, substituted or unsubstituted $C_{6-18}$ aryl groups, and substituted or unsubstituted $C_{7-30}$ aralkyl groups, or the $R_1$ and $R_2$ groups, together with the attached N atom, form a 5-7 membered saturated or unsaturated heterocyclic ring;
2) sujecting the cyclic lysine monomer and a caprolactam monomer to ring-opening polymerization in a molar ratio of 2 : 98 to 30 : 70, preferably 3 : 97 to 25 : 75, more preferably 4 : 96 to 20 : 80, to obtain a copolymer having a structure represented by the following formula (III),

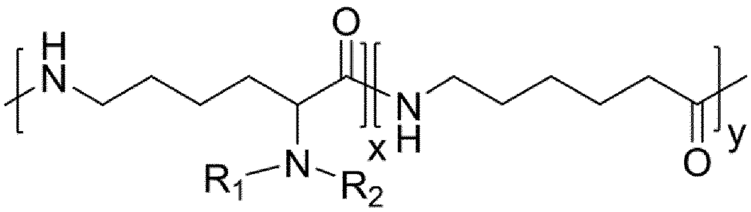

(III),

3) reacting the copolymer with a halide having a structure represented by the following formula (IV),

$R_3$-Hal (IV),

wherein the $R_3$ group is selected from the group consisting of hydrogen (H), $C_{1-24}$ linear or branched aliphatic hydrocarbyl groups, substituted or unsubstituted $C_{3-12}$ alicyclic hydrocarbyl groups, substituted or unsubstituted $C_{6-18}$ aryl groups and substituted or unsubstituted $C_{7-30}$ aralkyl groups,

Hal represents halogen, preferably chlorine, bromine or iodine, more preferably chlorine or bromine,

to obtain an antibacterial nylon 6 material having a structure represented by the following formula (I),

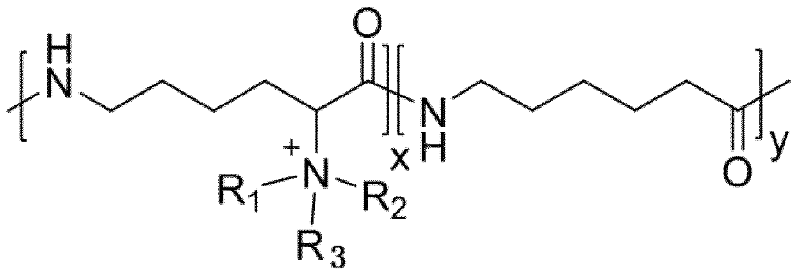

(I),

wherein the expression "substituted" means that the group is substituted by one or more substituents selected from $C_{1-18}$ linear or branched alkyl groups, preferably $C_{1-12}$ linear or branched alkyl groups, more preferably $C_{1-6}$ linear or branched alkyl groups.

**7.** The method of claim 6, wherein:

the $R_1$ and $R_2$ groups are independently selected from the group consisting of $C_{1-12}$ linear or branched aliphatic hydrocarbyl groups, substituted or unsubstituted $C_{3-6}$ alicyclic hydrocarbyl groups, substituted or unsubstituted $C_{6-10}$ aryl groups, and substituted or unsubstituted $C_{7-16}$ aralkyl groups, or the $R_1$ and $R_2$ groups, together with the attached N atom, form a 5-6 membered saturated or unsaturated heterocyclic ring, preferably the $R_1$ and $R_2$ groups are independently selected from the group consisting of methyl, ethyl, propyl, butyl, hexyl, octyl, dodecyl, allyl, phenyl, and benzyl, or the $R_1$ and $R_2$ groups, together with the attached N atom, form a tetrahydropyrrolyl or hexahydropyridyl group; and

the $R_3$ group is selected from the group consisting of hydrogen (H), $C_{1-12}$ linear or branched aliphatic hydrocarbyl groups, substituted or unsubstituted $C_{3-6}$ alicyclic hydrocarbyl groups, substituted or unsubstituted $C_{6-10}$ aryl groups and substituted or unsubstituted $C_{7-16}$ aralkyl groups, preferably the $R_3$ group is selected from the group consisting of hydrogen (H), methyl, ethyl, propyl, butyl, hexyl, octyl, dodecyl, cyclohexyl, phenyl and benzyl.

**8.** The method of claim 6 or 7, wherein the cyclic lysine monomer is provided in step 1) by protecting a primary amine group on the aminocaprolactam represented by formula (V) with a protecting group,

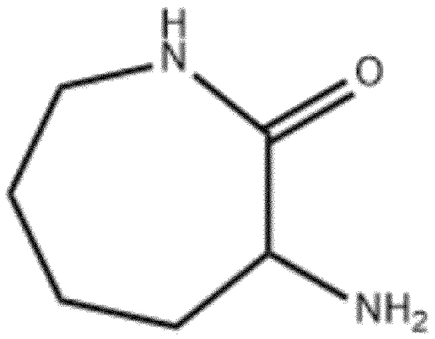

(V).

9. The method of claim 8, wherein said step 1) is achieved by reacting said aminocaprolactam with aldehydes and/or halogenated hydrocarbons having the $R_1$ and/or $R_2$ groups, preferably by reacting said aminocaprolactam with a reagent selected from the group consisting of formaldehyde, acetaldehyde, propionaldehyde, butyraldehyde, benzyl chloride, 1,5-dibromopentane, allyl bromide, dodecyl bromide, or a combination thereof.

10. The method of any one of claims 6-9, wherein step 2) is carried out in the presence of a catalyst, preferably the catalyst is selected from the group consisting of carbene reagents, guanidine reagents, amidine reagents, phosphazene reagents, alkali metals, alkali metal oxides, alkali metal hydroxides, alkali metal hydrides, alkali metal alkoxides, alkaline earth metals, alkaline earth metal oxides, alkaline earth metal hydroxides, alkaline earth metal hydrides, alkaline earth metal alkoxides, or combinations thereof, preferably selected from the group consisting of sodium hydride, potassium hydride, t-Bu$P_4$, potassium tert-butoxide, sodium methoxide, potassium methoxide, DBU, TBD, sodium, potassium, or combinations thereof.

11. The method of claim 10, wherein the molar ratio of the total amount of the cyclic lysine monomer and the caprolactam monomer to the catalyst in step 2) is: (10-50) : 1, preferably (10-30) : 1.

12. The method of any one of claims 6-11, wherein the ring-opening polymerization of step 2) is carried out in the presence of an activator having the following structure;

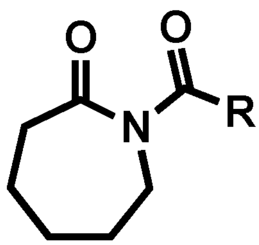

,

wherein R is selected from the group consisting of methyl, ethyl, phenyl, t-butylphenyl and trifluoromethylphenyl; preferably, the molar ratio of the total amount of the cyclic lysine monomer and the caprolactam monomer to the activator in step 2) is: (10-50) : 1, preferably (10-30) : 1.

13. The method of any one of claims 6-12, having one or more of the following characteristics:

the reaction conditions of step 2) include: a polymerization temperature of 140-180 °C, and a reaction time of 3-6 h;
the halide represented by the formula (IV) used in the step 3) is selected from the group consisting of hydrochloric acid, methyl iodide, ethyl bromide, butyl bromide, bromohexane, bromocyclohexane, benzyl bromide or combinations thereof;
the reaction of step 3) is carried out in a solvent selected from the group consisting of methanol, ethanol, trifluoroethanol, benzyl alcohol, ethylene glycol, cyclohexanol, or a combination thereof, under reaction conditions including: a reaction temperature of 40-70 °C, and a reaction time of 10-12 h; and/or
the step 3) further comprises the steps of settling the reaction product of the copolymer and the halide in ethyl acetate, centrifuging and drying to obtain the antibacterial nylon 6 material.

**14.** An article, comprising the antibacterial nylon 6 material of any one of claims 1-3, the nylon 6 composition of claim 4 or 5, or the antibacterial nylon 6 material obtained by the method of any one of claims 6-13.

**15.** The article of claim 14, selected from the group consisting of textiles, daily necessities, building materials, packaging materials, and panels.

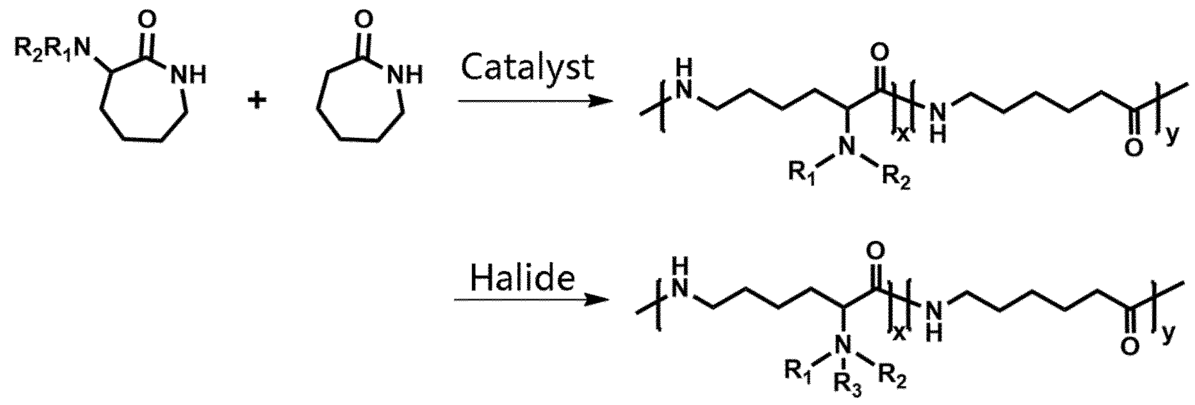


Fig. 1

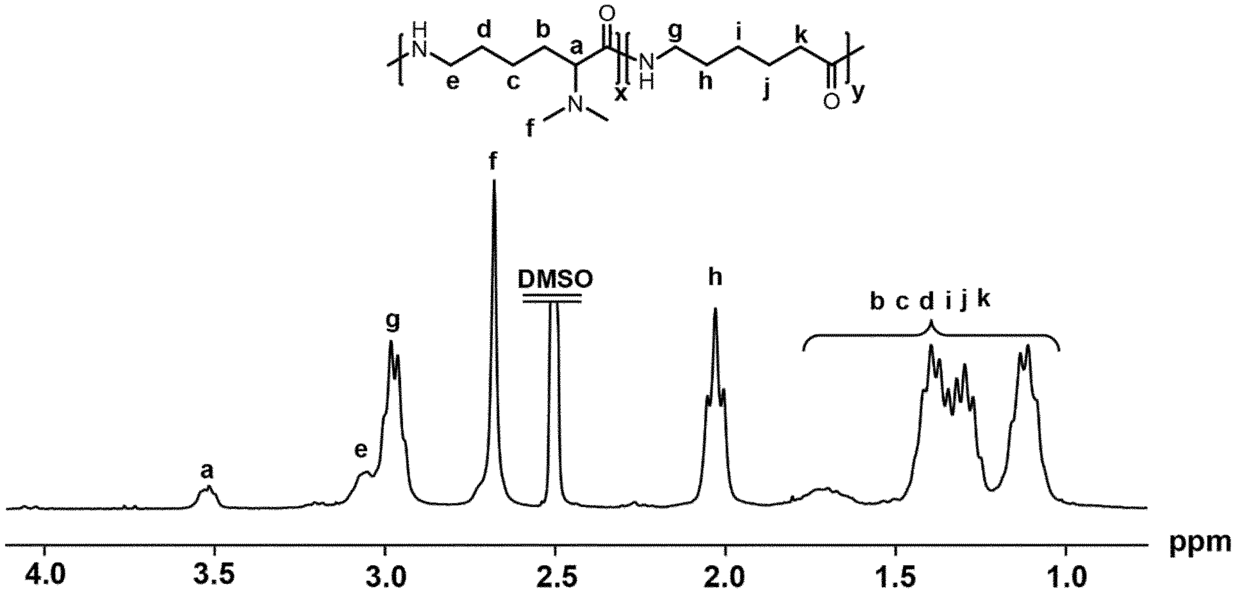


Fig. 2

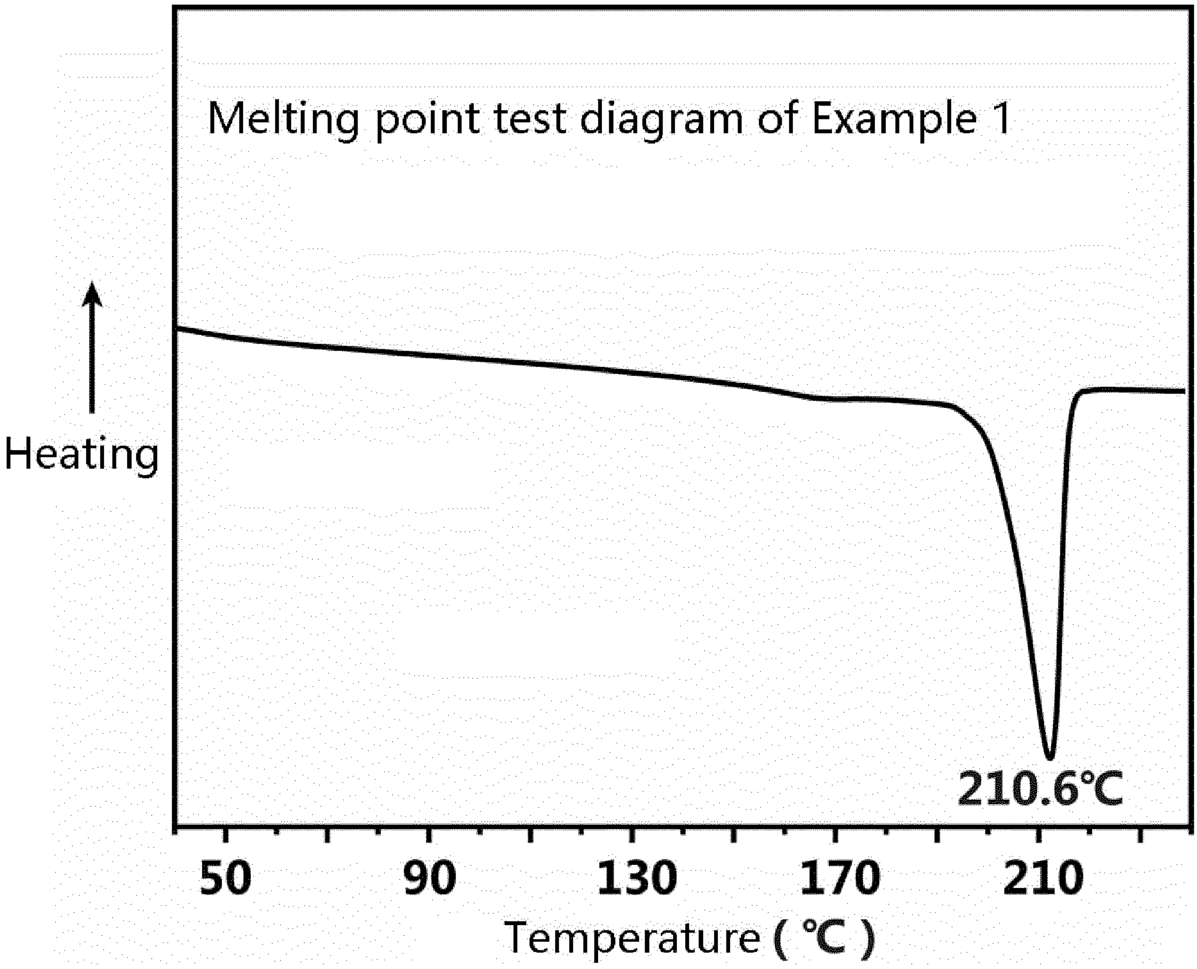
Melting point test diagram of Example 1
Heating
210.6℃
50
90
130
170
210
Temperature ( ℃ )

Fig. 3

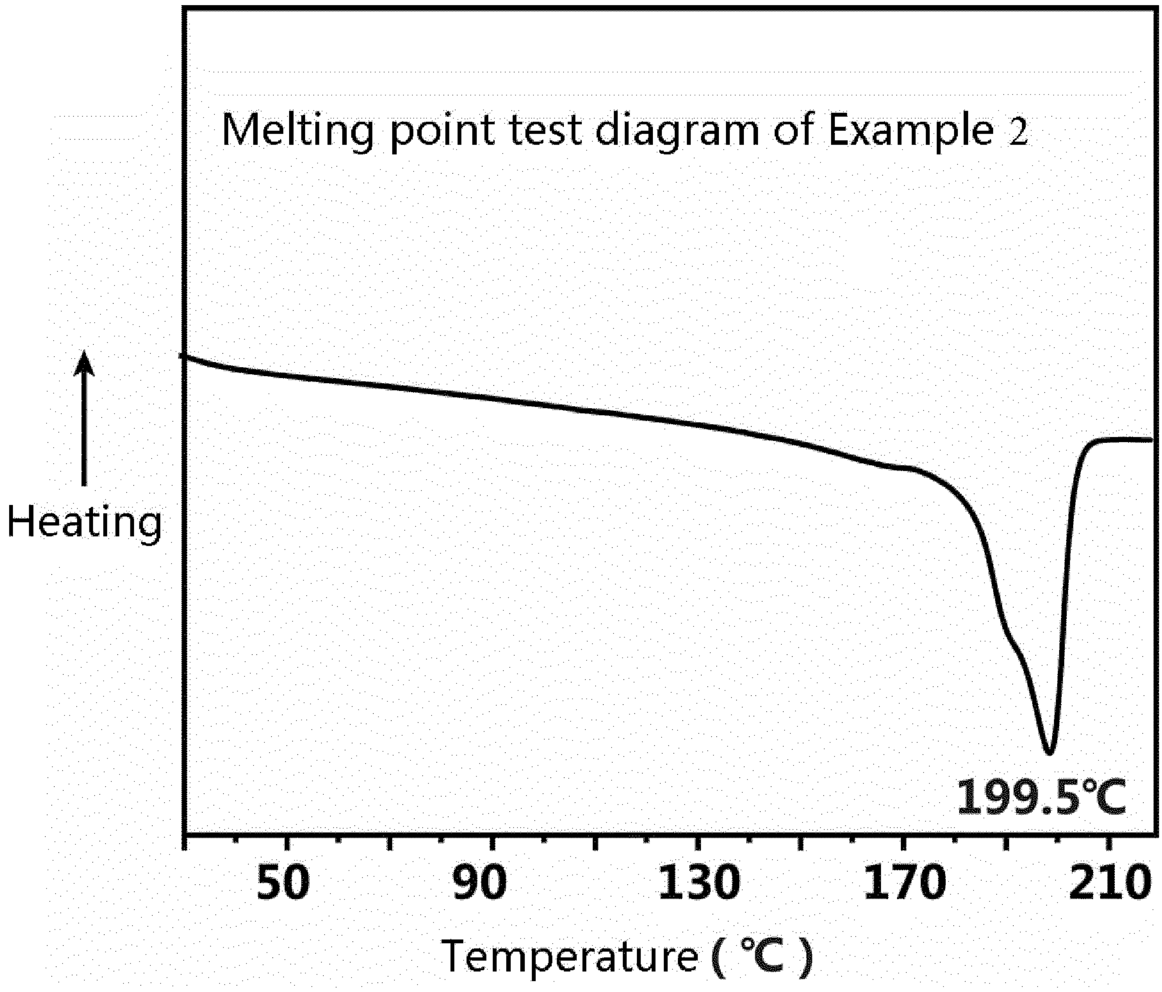
Melting point test diagram of Example 2
Heating
199.5℃
50
90
130
170
210
Temperature ( ℃ )

Fig. 4

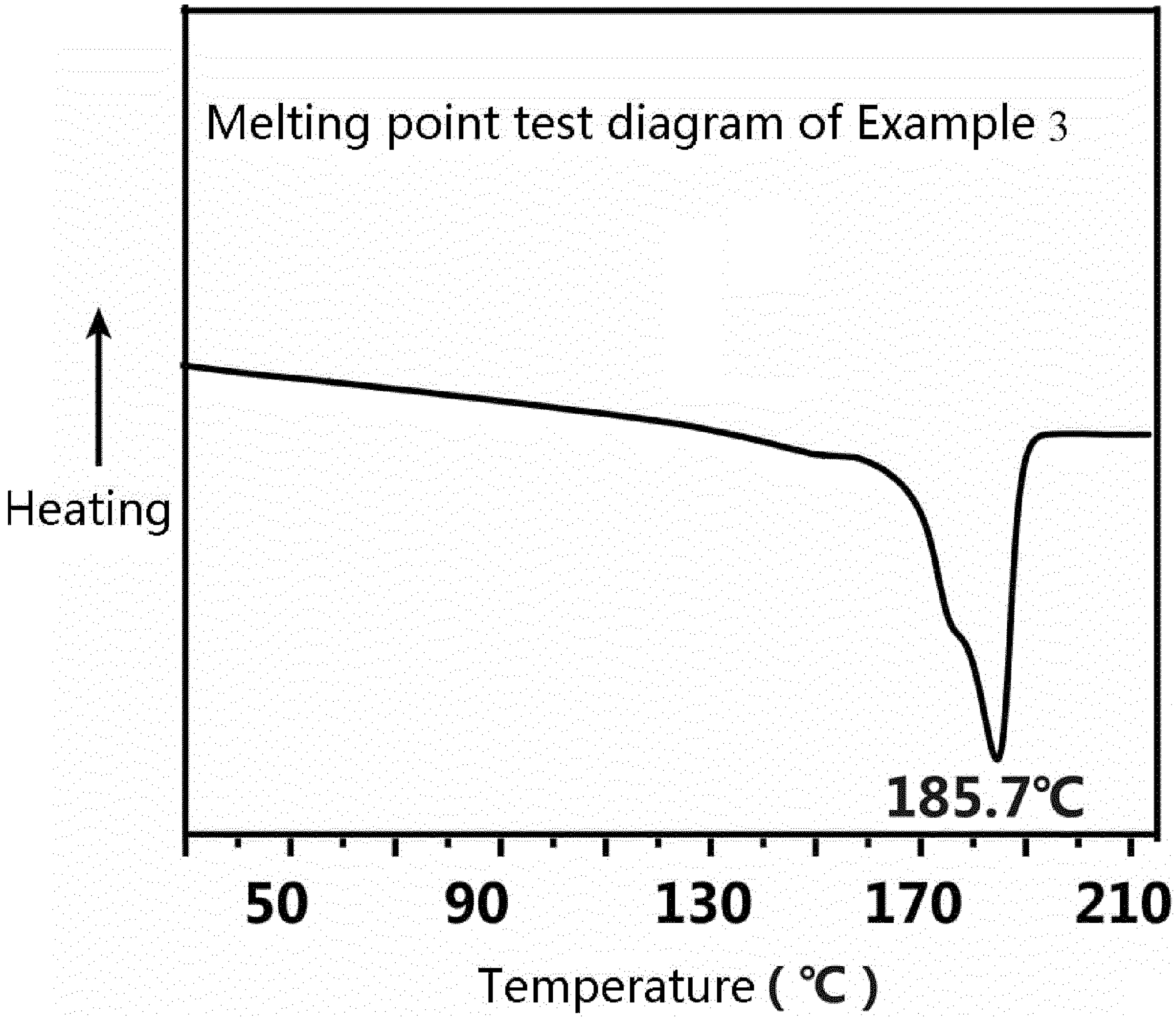
Melting point test diagram of Example 3
Heating
185.7℃
50
90
130
170
210
Temperature ( ℃ )

Fig. 5

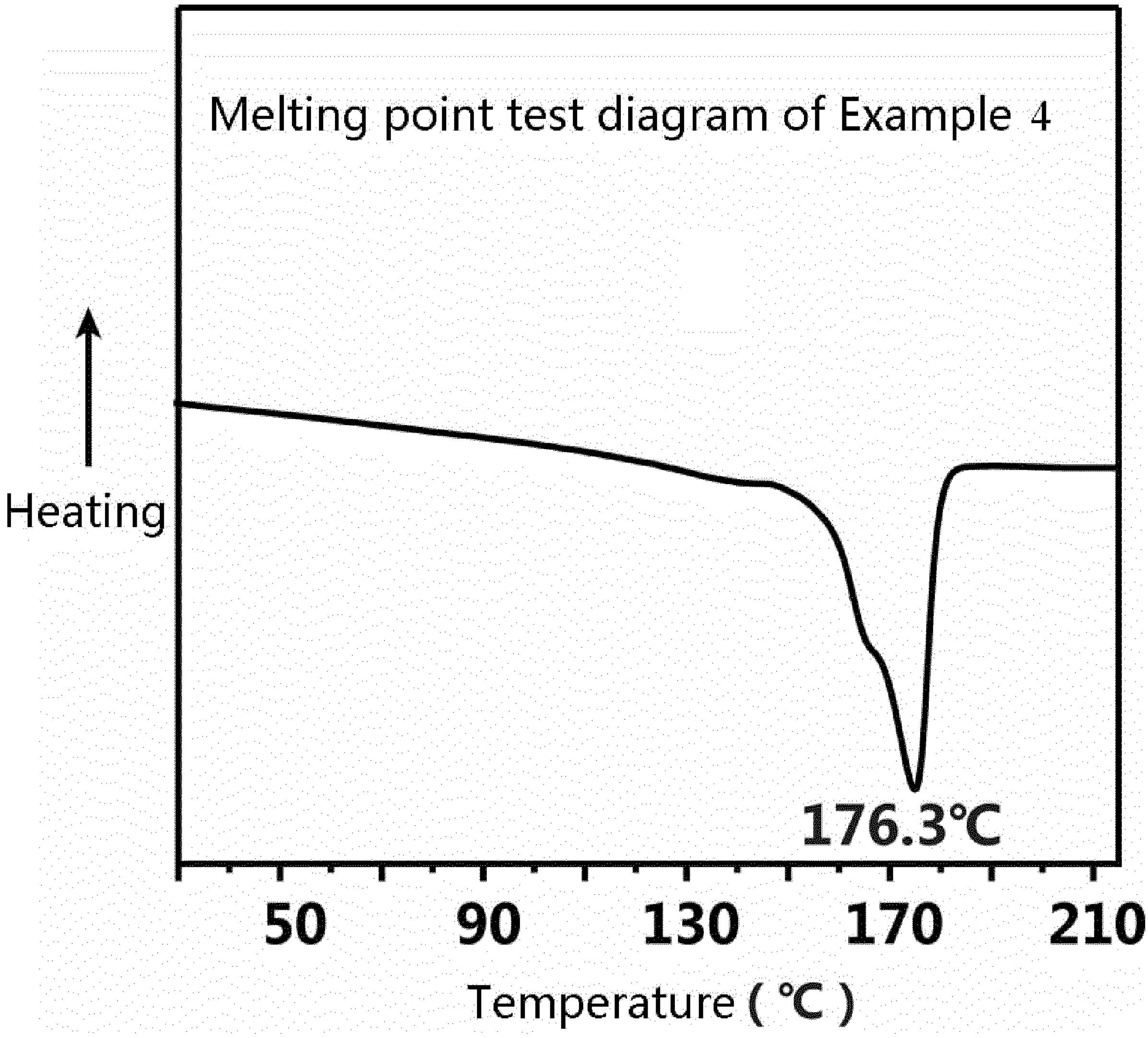
Melting point test diagram of Example 4
Heating
176.3℃
50
90
130
170
210
Temperature ( ℃ )

Fig. 6

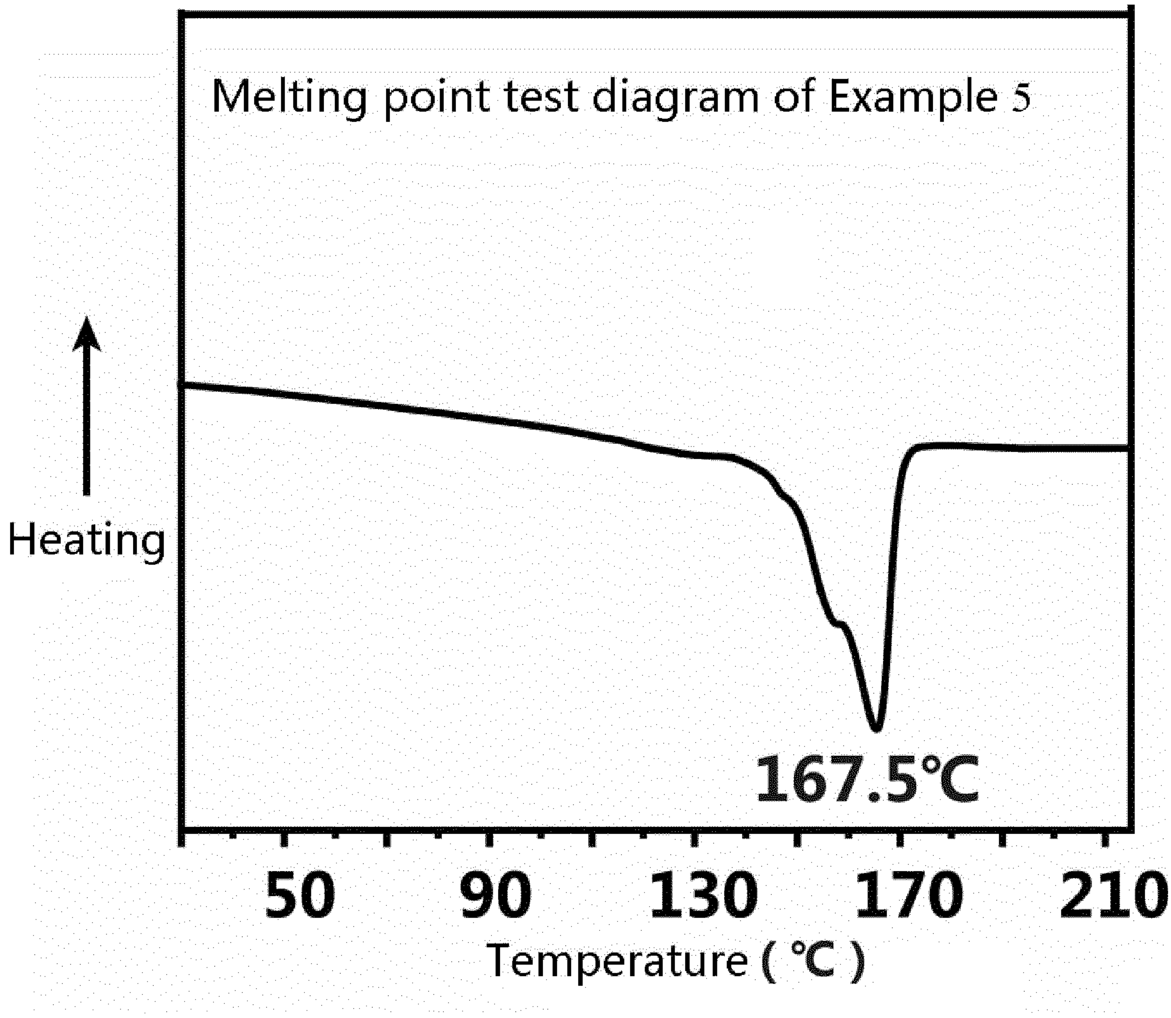

Melting point test diagram of Example 5
Heating
167.5℃
50
90
130
170
210
Temperature ( ℃ )


Fig. 7

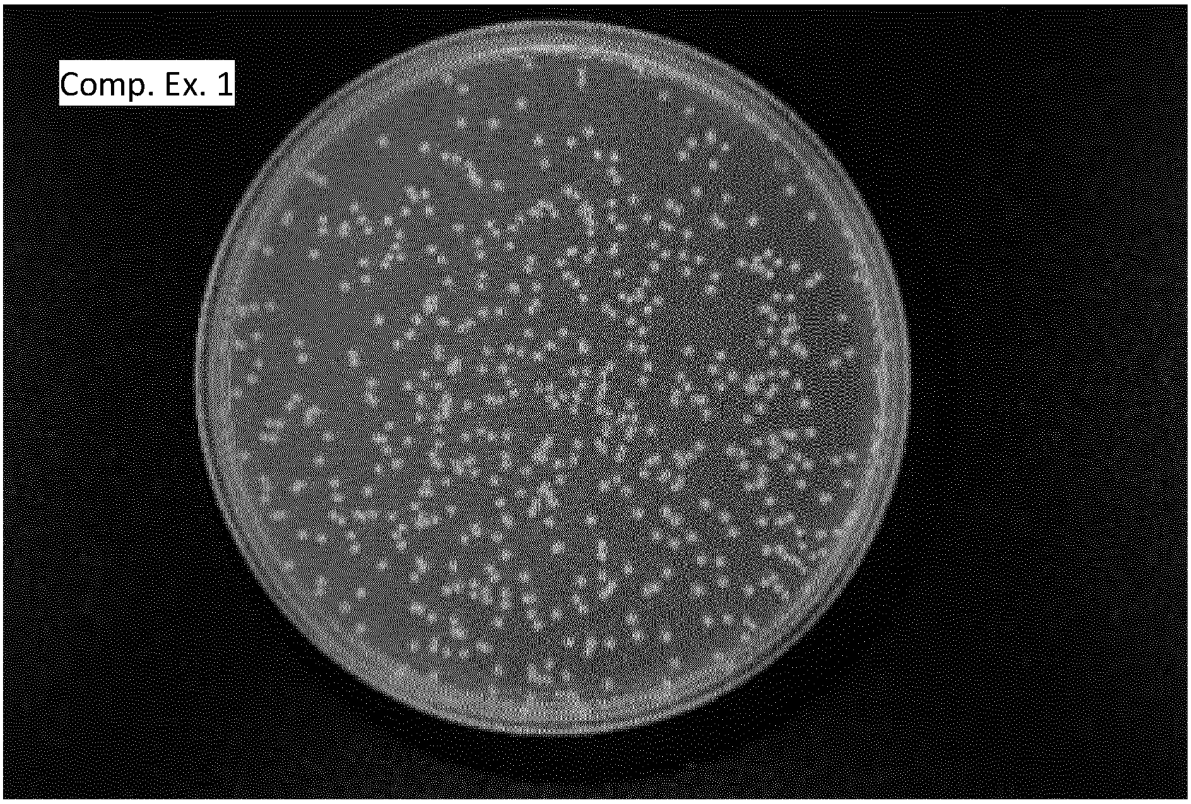


Fig. 8A

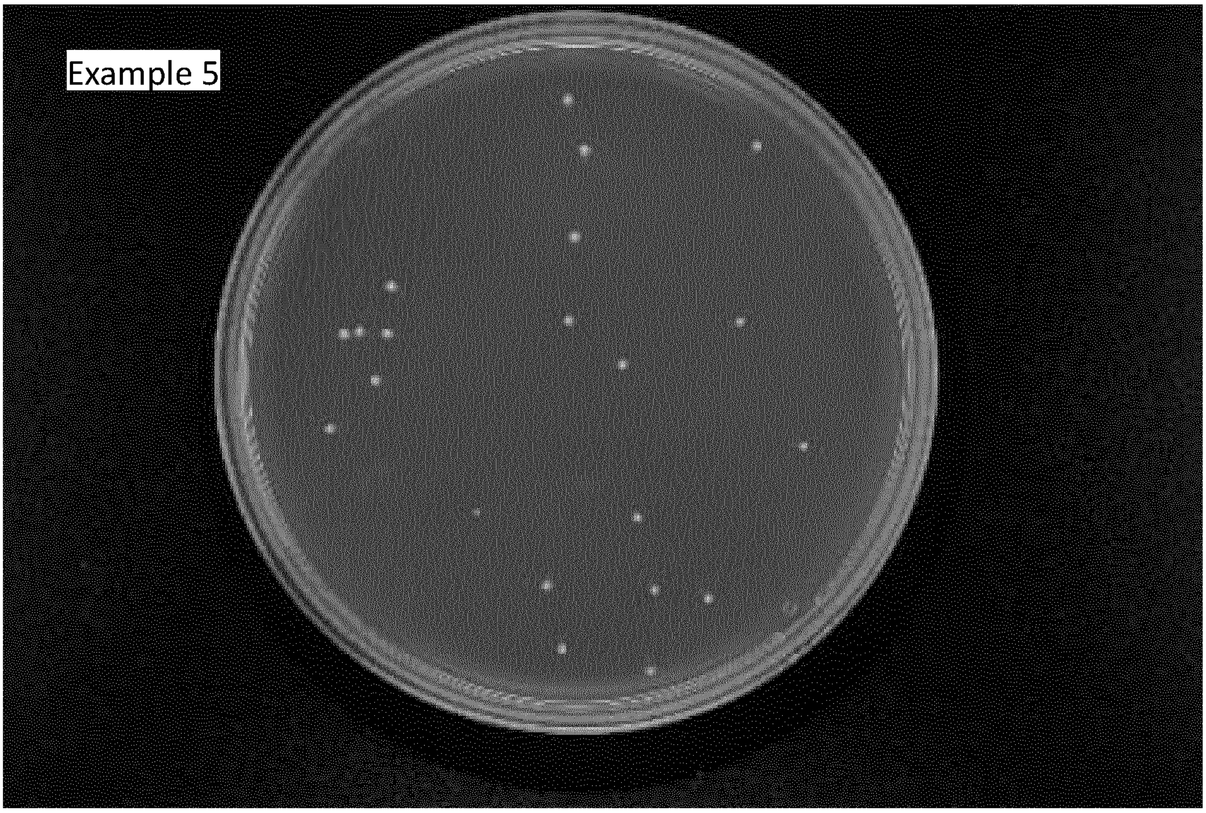


Fig. 8B

## INTERNATIONAL SEARCH REPORT

International application No.
**PCT/CN2022/113177**

**A. CLASSIFICATION OF SUBJECT MATTER**

C08G 69/14(2006.01)i; C08G 69/18(2006.01)i

According to International Patent Classification (IPC) or to both national classification and IPC

**B. FIELDS SEARCHED**

Minimum documentation searched (classification system followed by classification symbols)

C08G 69

Documentation searched other than minimum documentation to the extent that such documents are included in the fields searched

Electronic data base consulted during the international search (name of data base and, where practicable, search terms used)

WPABSC; CNTXT; WPABS; ENTXT; DWPI; ENTXTC; VEN; CJFD; ISI Web of Science; STN: 己内酰胺, 赖氨酸, 杀菌, 抑菌, 抗菌, 尼龙, 聚酰胺, 共聚, 嵌段, 葡萄球菌, 陶友华, Caprolactam, Lysine, bactericidal, Bacteriostatic, Antibacterial, Nylon, Polyamide, copolymer?, block, Staphylococcus, Tao youhua

**C. DOCUMENTS CONSIDERED TO BE RELEVANT**

| Category* | Citation of document, with indication, where appropriate, of the relevant passages | Relevant to claim No. |
|---|---|---|
| PX | Jiawei Lian et al. "Organocatalytic Copolymerization of Cyclic Lysine Derivative and ε-Caprolactam toward Antibacterial Nylon-6 Polymers" *ACS Macro Letters,* Vol. 11, No. 1,, 17 December 2021 (2021-12-17), ISSN: 2161-1653, pp. 46-52 | 1-15 |
| Y | Deniz Tunc et al. "Reversible Cross-Linking of Aliphatic Polyamides Bearing Thermo- and Photoresponsive Cinnamoyl Moieties" *Macromolecules,* Vol. 47, No. 23, 01 December 2014 (2014-12-01), ISSN: 0024-9297, pp. 8247-8254 | 1-15 |
| Y | Deniz Tunc et al. "Synthesis of aliphatic polyamide bearing fluorinated groups from ε-caprolactam and modified cyclic lysine" *European Polymer Journal,* Vol. 71, 29 August 2015 (2015-08-29), ISSN: 0014-3057, pp. 575-584 | 1-15 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 October 2022** | **28 October 2022** |
| Name and mailing address of the ISA/CN<br>**China National Intellectual Property Administration (ISA/CN)**<br>**No. 6, Xitucheng Road, Jimenqiao, Haidian District, Beijing 100088, China**<br>Facsimile No. **(86-10)62019451** | Authorized officer<br><br>Telephone No. |

Form PCT/ISA/210 (second sheet) (January 2015)

**INTERNATIONAL SEARCH REPORT**

International application No.
**PCT/CN2022/113177**

**C. DOCUMENTS CONSIDERED TO BE RELEVANT**

| Category* | Citation of document, with indication, where appropriate, of the relevant passages | Relevant to claim No. |
|---|---|---|
| Y | CN 111116472 A (CHANGCHUN INSTITUTE OF APPLIED CHEMISTRY, CHINESE ACADEMY OF SCIENCES) 08 May 2020 (2020-05-08)<br>description, paragraph 29, and figure 1 | 1-15 |
| Y | Chen, Jinlong et al. "Organocatalyzed Ring-Opening Polymerization of Cyclic Lysine Derivative: Sustainable Access to Cationic Poly(ε-lysine) Mimics"<br>*Macromolecules,* Vol. 54, No. 5, 23 February 2021 (2021-02-23),<br>ISSN: 0024-9297,<br>pp. 2226-2231 | 1-15 |
| A | US 5028689 A (BAYER AG) 02 July 1991 (1991-07-02)<br>entire document | 1-15 |
| A | WO 2015037823 A1 (KWANGWOON UNIVERSITY INDUSTRY-ACADEMIC COLLABORATION FOUNDATION) 19 March 2015 (2015-03-19)<br>entire document | 1-15 |
| A | CN 104629045 A (CHANGCHUN INSTITUTE OF APPLIED CHEMISTRY, CHINESE ACADEMY OF SCIENCES) 20 May 2015 (2015-05-20)<br>entire document | 1-15 |
| A | WO 2020028073 A1 (UNIV MASSACHUSETTS et al.) 06 February 2020 (2020-02-06)<br>entire document | 1-15 |

Form PCT/ISA/210 (second sheet) (January 2015)

**INTERNATIONAL SEARCH REPORT**
**Information on patent family members**

International application No.
**PCT/CN2022/113177**

| Patent document cited in search report | | | Publication date (day/month/year) | Patent family member(s) | | | Publication date (day/month/year) |
|---|---|---|---|---|---|---|---|
| CN | 111116472 | A | 08 May 2020 | CN | 111116472 | B | 01 March 2022 |
| US | 5028689 | A | 02 July 1991 | DE | 3831709 | A1 | 29 March 1990 |
| | | | | JP | H02115225 | A | 27 April 1990 |
| | | | | EP | 0360060 | A1 | 28 March 1990 |
| WO | 2015037823 | A1 | 19 March 2015 | KR | 20150029526 | A | 18 March 2015 |
| | | | | KR | 101565253 | B1 | 13 November 2015 |
| CN | 104629045 | A | 20 May 2015 | CN | 104629045 | B | 09 November 2016 |
| WO | 2020028073 | A1 | 06 February 2020 | None | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 107652669
- CN 107793748
- CN 108047709